(19) Europäisches Patentamt
European Patent Office
Office européen des brevets

(11) EP 4 607 942 A1

(12) EUROPEAN PATENT APPLICATION
published in accordance with Art. 153(4) EPC

(43) Date of publication:
27.08.2025 Bulletin 2025/35

(21) Application number: 23882910.5

(22) Date of filing: 21.09.2023

(51) International Patent Classification (IPC):
H04N 23/69 (2023.01)     H04N 23/63 (2023.01)
H04N 23/55 (2023.01)     H04N 23/90 (2023.01)
H04N 23/80 (2023.01)

(52) Cooperative Patent Classification (CPC):
H04N 23/55; H04N 23/63; H04N 23/69;
H04N 23/80; H04N 23/90

(86) International application number:
PCT/KR2023/014387

(87) International publication number:
WO 2024/090803 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.10.2022 KR 20220137169
25.11.2022 KR 20220159927

(71) Applicant: Samsung Electronics Co., Ltd.
Suwon-si, Gyeonggi-do 16677 (KR)

(72) Inventors:
• KIM, Ildo
  Suwon-si Gyeonggi-do 16677 (KR)
• KOH, Sungshik
  Suwon-si Gyeonggi-do 16677 (KR)
• KWAK, Seongsin
  Suwon-si Gyeonggi-do 16677 (KR)
• WON, Jonghun
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) METHOD FOR PROVIDING IMAGE, AND ELECTRONIC DEVICE SUPPORTING SAME

(57) An electronic device, according to one embodiment, may comprise a first camera supporting an optical zoom, and at least one processor operatively connected to the first camera. The at least one processor may be configured to increase a zoom magnification on the basis of an input. The at least one processor may be configured to, on the basis of the zoom magnification falling within a first zoom magnification range corresponding to the first camera, obtain a first image using the first camera at a first position of a lens of the first camera while the lens of the first camera moves to a position corresponding to the zoom magnification. The at least one processor may be configured to determine a first ratio for cropping the obtained first image on the basis of an optical zoom magnification corresponding to the first position and the zoom magnification. The at least one processor may be configured to obtain a second image by cropping the first image on the basis of the first ratio.

500

```
        START
          │
          ▼
┌──────────────────────────────┐
│  INCREASE ZOOM MAGNIFICATION  │──── 501
└──────────────────────────────┘
          │
          ▼
┌────────────────────────────────────┐
│ OBTAIN FIRST IMAGE BY USING FIRST   │──── 503
│ CAMERA                              │
└────────────────────────────────────┘
          │
          ▼
┌──────────────────────────────┐
│      DETERMINE FIRST RATIO    │──── 505
└──────────────────────────────┘
          │
          ▼
┌──────────────────────────────┐
│      OBTAIN SECOND IMAGE      │──── 507
└──────────────────────────────┘
          │
          ▼
         END
```

FIG. 5

EP 4 607 942 A1

**Description**

[Technical Field]

The disclosure relates to a method for providing an image and an electronic device supporting same.

[Background Art]

Electronic devices (e.g., a smartphone) may include multiple cameras to provide improved camera functions. For example, an electronic device may include an ultra-wide-angle camera, a wide-angle camera, a first telephoto camera, and a second telephoto camera with different default zoom magnifications. Each of the multiple cameras included in the electronic device may obtain images, using digital zoom, at zoom magnifications other than a default zoom magnification.
Nowadays, electronic devices are being equipped with cameras that support optical zoom (also, referred to as "continuous optical zoom") in addition to cameras that only support digital zoom. The optical zooming may refer to zooming in (or out) on a subject by changing the focal length by moving the lens. The optical zoom may alter the degree of refraction of light reflected from a subject so as to enlarge an image captured by a camera, resulting in higher image quality compared to an image (e.g., an image obtained by cropping images obtained through a camera) obtained by using a digital zoom.
The above-described information may be provided as a related art to help understanding of the disclosure. No claim or determination is made as to the applicability of any of the foregoing as prior art to the disclosure.

[Detailed Description of the Invention]

[Technical Solution]

An electronic device may provide an image obtained at a changed zoom magnification, based on a user input for changing a zoom magnification.
The electronic device may, in case that an image is obtained using a digital zoom, provide an image obtained at a changed zoom magnification regardless of a zoom magnification change rate. For example, in the case of the digital zoom, the rate at which an electronic device obtains an image and the rate at which the electronic device processes the image according to a zoom magnification change may be substantially identical. Accordingly, the electronic device may, in case that a zoom magnification change rate is equal to or greater than a designated rate, provide an image obtained at a rate corresponding to the zoom magnification change rate.
On the other hand, in case that the electronic device obtains images using the optical zoom, time may be required to move a lens to a position that corresponds to the changed zoom magnification. Accordingly, in case that the electronic device obtains an image by using the optical zoom, when the zoom magnification change rate is greater than or equal to the designated rate, it may be difficult to provide an image obtained at a changed zoom magnification that matches (e.g., immediately after a zoom magnification change) the zoom magnification change rate.
In addition, in case that a zoom magnification is changed from a zoom magnification range used by a digital zoom (e.g., a zoom magnification range configured to obtain an image by using a digital zoom) to a zoom magnification range used by an optical zoom (e.g., a zoom magnification range configured to obtain an image by using an optical zoom), successive images obtained by the electronic device may appear disparate to the user due to a difference between the zoom magnification change rate in the digital zoom and the zoom magnification change rate in the optical zoom.
An embodiment of the disclosure relates to a method for providing an image and an electronic device supporting same by which an image may be obtained by using an optical zoom and/or a digital zoom within a zoom magnification range usable by the optical zoom.
The technical issues addressed by this disclosure are not limited to the technical issues described above, and other technical issues not described will be apparent to those having ordinary skill in the art to which this disclosure relates from the following description.
An electronic device, according to one embodiment, may include a first camera supporting an optical zoom, and at least one processor operatively connected to the first camera. The at least one processor may be configured to increase a zoom magnification, based on an input. The at least one processor may be configured to, based on the zoom magnification falling within a first zoom magnification range corresponding to the first camera, obtain a first image by using the first camera at a first position of a lens of the first camera while the lens of the first camera is moved to a position corresponding to the zoom magnification. The at least one processor may be configured to determine a first ratio for cropping the obtained first image, based on an optical zoom magnification corresponding to the first position and the zoom magnification. The at least one processor may be configured to obtain a second image by cropping, based on the first ratio, the first image.
In an embodiment, a method for providing an image by the electronic device may include increasing a zoom magnification, based on an input. The method may include, based on the zoom magnification falling within a first zoom magnification range corresponding to the first camera included in the electronic device and supporting the optical zoom, obtain a first image by using the first camera at a first position of a lens of the first camera while the lens of the first camera is moved to a position corresponding to the zoom magnification. The method may include determining a first ratio for cropping the obtained first image, based on an optical zoom magnification corresponding to the first position and the zoom magnification. The method may include obtaining a second image by cropping, based on the first ratio, the first image.

In an embodiment, an electronic device may include a first camera supporting an optical zoom, and at least one processor operatively connected to the first camera. The at least one processor may be configured to decrease a zoom magnification, based on an input. The at least one processor may be configured to, based on the decreased zoom magnification falling within the first zoom magnification range, obtain a first image by using the first camera in a state where a lens of the first camera has been moved to a position corresponding to a minimum zoom magnification of the first zoom magnification range. The at least one processor may be configured to determine the first ratio for cropping the obtained image, based on the minimum zoom magnification and the decreased zoom magnification. The at least one processor may be configured to obtain a second image by cropping, based on the first ratio, the obtained first image.

In an embodiment, a non-transitory computer-readable medium configured to store computer-executable instructions is provided, wherein the computer-executable instructions may, when executed, cause an electronic device including at least one processor to increase a zoom magnification, based on an input. The computer-executable instructions may, when executed, cause the electronic device including the at least one processor to, based on the zoom magnification falling within a first zoom magnification range corresponding to a first camera configured to support an optical zoom, obtain a first image by using the first camera at a first position of a lens of the first camera while the lens of the first camera is moved to a position corresponding to the zoom magnification. The computer-executable instructions may, when executed, cause the electronic device including the at least one processor to determine a first ratio for cropping the obtained first image, based on an optical zoom magnification corresponding to the first position and the zoom magnification. The computer-executable instructions may, when executed, cause the electronic device including the at least one processor to obtain a second image by cropping, based on the first ratio, the first image.

The method for providing an image and the electronic device supporting same according to an embodiment may minimize image quality degradation of images obtained through a camera and avoid the slower zoom magnification change rate of the optical zoom by obtaining images by using the optical zoom and/or the digital zoom within a zoom magnification range usable by the optical zoom.

It will be appreciated by a person skilled in the art that effects which may be achieved from the disclosure are not limited to the effects described above and other effects that are not described above will be clearly understood from the following detailed description.

[Brief Description of Drawings]

FIG. 1 is a block diagram illustrating an electronic device in a network environment according to an embodiment.
FIG. 2 is a block diagram illustrating a camera module according to an embodiment.
FIG. 3 is a block diagram illustrating an electronic device according to an embodiment.
FIG. 4 is a block diagram of a processor according to an embodiment.
FIG. 5 is a flowchart illustrating a method for providing an image according to an embodiment.
FIG. 6 is a flowchart illustrating a method for obtaining an image through a first camera according to an embodiment.
FIG. 7 is a diagram illustrating a method for obtaining an image through a first camera according to an embodiment.
FIG. 8 is a diagram illustrating a method for obtaining an image through a first camera according to an embodiment.
FIG. 9 is a diagram illustrating a method for determining a first ratio according to an embodiment.
FIG. 10 is a flowchart illustrating a method for providing an image according to an embodiment.
FIG. 11 is a flowchart illustrating a method for obtaining an image through a first camera according to an embodiment.
FIG. 12 is a diagram illustrating a method for obtaining an image through a first camera according to an embodiment.
FIG. 13 is a diagram illustrating a method for providing an image in case that a zoom magnification increases according to an embodiment.
FIG. 14 is a diagram illustrating a method for providing an image in case that a zoom magnification decreases according to an embodiment.

[Mode for Carrying out the Invention]

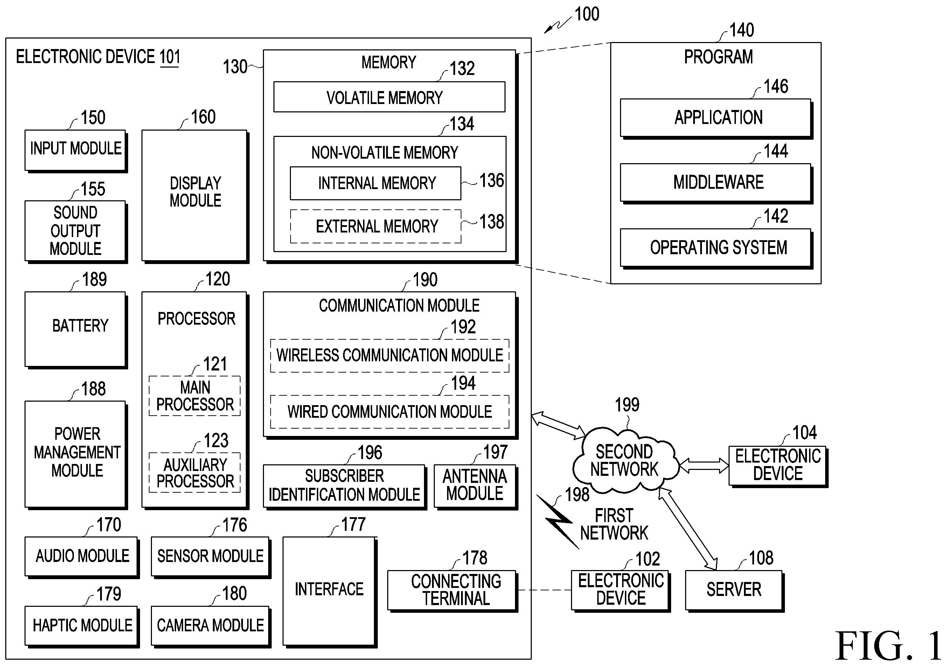

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199).

According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

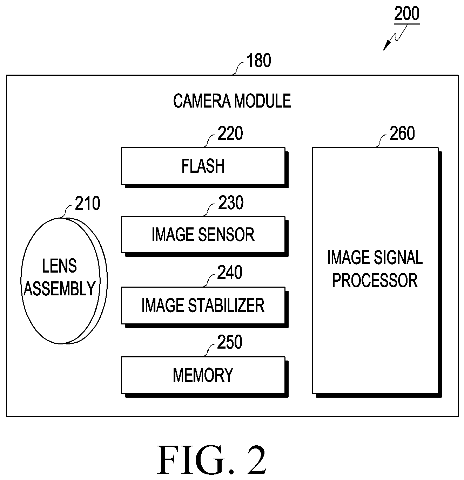

FIG. 2 is a block diagram 200 illustrating the camera module 180 according to various embodiments. Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 160 may be displayed, by the processor 120, via the display device 260 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

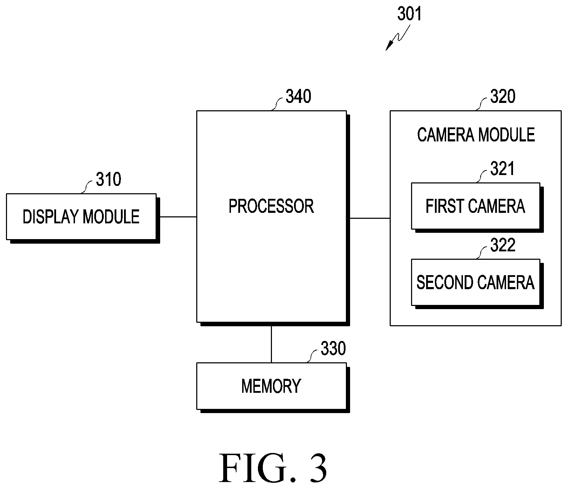

FIG. 3 is a block diagram illustrating an electronic device 301 according to an embodiment.

Referring to FIG. 3, in an embodiment, the electronic device 301 (e.g., the electronic device 101 in FIG. 1) may include a display module 310, a camera module 320, a memory 330, and/or a processor 340.

In an embodiment, the display module 310 may be included in the display module 160 in FIG. 1.

In an embodiment, the display module 310 may display an image obtained by the camera module 320. For example, the display module 310 may display a dynamic image (e.g., a preview image or a video image) and/or a still image (e.g., a capture image) obtained by the camera module 320.

In an embodiment, the camera module 320 may be included in the camera module 180 in FIGS. 1 and 2.

In an embodiment, the camera module 320 may include a first camera 321 and a second camera 323.

In an embodiment, the first camera 321 may include a lens (e.g., a lens assembly 210) movable according to a zoom magnification change. The first camera 321 may have a changeable angle of view by moving the lens. For example, the first camera 321 may change a focal length within a designated focal length range by moving the lens according to a zoom magnification change.

In an embodiment, the first camera 321 may be an optical zoom camera configured to support an optical zoom. In an embodiment, the first camera 321 may include at least one camera configured to support an optical zoom.

In an embodiment, the first camera 321 may correspond to a camera configured to support an optical zoom and/or a digital zoom.

In an embodiment, the optical zoom (also, referred to as "continuous optical zoom") may refer to a method of moving a lens (e.g., a lens included in the first camera 321) to a position corresponding to a zoom magnification, and then obtaining an image using light passing through the lens at the moved position.

In an embodiment, the first camera 321 may obtain an image within a designated zoom magnification range. Hereinafter, the designated zoom magnification range (e.g., a zoom magnification range set to allow the first camera 321 to obtain an image) within which the first camera 321 obtains an image may be referred to as a "first zoom magnification range". In an embodiment, the first zoom magnification range may be greater than or equal to 3 times (3.0x) and less than 5 times (5.0x). However, the first zoom magnification range is not limited to the range of greater than or equal to 3 times (3.0x) and less than 5 times (5.0x) described above. For example, the first zoom magnification range may vary depending on specification of the first camera 321 (e.g., physical components that the first camera 321 includes).

In an embodiment, the second camera 322 may correspond to a camera having a fixed angle of view. For example, the second camera 322 may correspond to a single-focus camera having a fixed focal length (e.g., a fixed one focal length).

In an embodiment, the second camera 322 may correspond to a camera configured to support only digital zoom from among the optical zoom and the digital zoom.

In an embodiment, the digital zoom may refer to a method of obtaining an image through the camera module 320 (e.g., the first camera 321 and the second camera 322), and then cropping a portion of the obtained image to obtain an image to be displayed on the display.

In an embodiment, the second camera 322 may include one or more cameras. For example, the second camera 322 may include one or more cameras having a focal length different (e.g., not falling within the designated focal length range of the first camera 321) from the designated focal length range of the first camera 321. However, it is not limited thereto. For example, the second camera 322 may also include a camera having a focal length falling within the designated focal length range of the first camera 321.

In an embodiment, in case that the second camera 322 includes a plurality of cameras, the plurality of cameras may have different angles of view (e.g., different focal lengths).

In an embodiment, in case that the second camera 322 includes a plurality of cameras, each of the plurality of cameras may obtain an image within a designated zoom magnification range (e.g., a zoom magnification range set to allow each of the plurality of cameras to obtain an image). For example, the second camera 322 may include a (2-1)th camera (also referred to as an "ultra-wide-angle camera") that obtains an image in a zoom magnification range of greater than or equal to 0.5 times (0.5x) and less than 1 times (1.0x) (hereinafter referred to as a "(2-1)th zoom magnification range"), a (2-2)th camera (also referred to as a "wide-angle camera") that obtains an image in a zoom magnification range of greater than or equal to 1 times (1.0x) and less than 3 times (3.0x) (hereinafter referred to as a "(2-2)th zoom magnification range"), and a (2-3)th camera (also referred to as a "telephoto camera") that obtains an image in a zoom magnification range of greater than or equal to 5 times (5.0x) and less than 100 times (100.0x) (hereinafter referred to as a "(2-3)th zoom magnification range") (hereinafter, the (2-1)th zoom magnification range, the (2-2)th zoom magnification range, and the (2-3)th zoom magnification range are collectively referred to as the "second zoom magnification range"). However, it is not limited thereto. For example, the second camera 322 may not include a portion of the (2-1)th camera, the (2-2)th camera, and the (2-3)th camera. For example, the second camera 322 may further include, in addition to the (2-1)th camera, the (2-2)th camera, and the (2-3)th camera, an additional camera configured to obtain an image within a zoom magnification range other than the (2-1)th zoom magnification range, the (2-2)th zoom magnification range, and the (2-3)th zoom magnification range. For example, the (2-1)th zoom magnification range, the (2-2)th zoom magnification range, and the (2-3)th zoom magnification range may vary depending on specifications of the (2-1)th camera, the (2-2)th camera, and the (2-3)th camera.

In an embodiment, the camera module 320 may further include components for moving a position of a lens, based on a zoom magnification obtained from the processor 340. For example, the camera module 320 may further include an actuator (and a driving motor) configured to move a position of the lens of the first camera 321, a controller configured to control an operation of the actuator based on a zoom magnification obtained from the processor 340, and/or a memory (e.g., the memory 250 in FIG. 2) configured to store a current position (and a moved position) of the lens. However, the components included in the camera module 320 are not limited to the components described above.

In an embodiment, the memory 330 may be included in the memory 130 in FIG. 1.

In an embodiment, the memory 330 may store information configured to perform operations for providing an image. The information stored in the memory 330 will be described below.

In an embodiment, the processor 340 may be included in the processor 120 in FIG. 1.

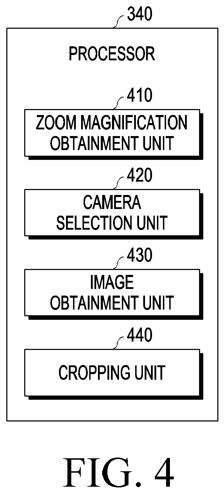

In an embodiment, the processor 340 may control overall operations for providing an image. In an embodiment, the processor 340 may include one or more processors configured to provide an image. The processor 340 may include a plurality of components to perform operations for providing an image. The plurality of components included in the processor 340 will be described with reference to FIG. 4 below.

FIG. 3 shows that the electronic device 101 includes the display module 310, the camera module 320, the memory 330, and/or the processor 340, but is not limited thereto. For example, the electronic device 101 may further include at least one component (e.g., the communication module 190 in FIG. 1) shown in FIG. 1.

FIG. 4 is a block diagram of a processor 340 according to an embodiment.

Referring to FIG. 4, in an embodiment, the processor 340 may include a zoom magnification obtainment unit 410, a camera selection unit 420, an image obtainment unit 430, and a cropping unit 440.

In an embodiment, the zoom magnification obtainment unit 410 may obtain, based on an input, a zoom magnification and set (e.g., change or adjust), based on the obtained zoom magnification, a zoom magnification.

In an embodiment, the zoom magnification obtainment unit 410 may display, through the display module 310, a screen including an object for setting a zoom magnification of the camera module 320 while a camera application is executed (e.g., a preview is displayed). The zoom magnification obtainment unit 410 may, based on user input for the object, maintain the zoom magnification at a default zoom magnification (e.g., 1 times (1.0x)), increase the zoom magnification (e.g., change the zoom magnification to two times (2.0x)), or decrease the zoom magnification (e.g., change the zoom magnification to half a magnification (0.5x)).

In an embodiment, the zoom magnification obtainment unit 410 may change the zoom magnification based on a pinch input with respect to the display module 310 while a preview is displayed. For example, the zoom magnification obtainment unit 410 may, while a preview is displayed, increase the zoom magnification based on a pinch-out input with respect to the display module 310 and decrease the zoom magnification based on a pinch-in input for the display module 310.

In an embodiment, the zoom magnification obtainment unit 410 may change the zoom magnification based on an input with respect to a physical key of the electronic device 301 while a preview is displayed.

However, a method for changing a zoom magnification based on a user input is not limited to the examples described above. In addition, in the above-described examples, it is exemplified that the zoom magnification is changed according to a user input, but the method is not limited thereto. For example, the zoom magnification obtainment unit 410 may change the zoom magnification based on a designated input (e.g., a distance between the camera module 320 and a subject or an input received from an external electronic device) in addition to the user input.

In an embodiment, the camera selection unit 420 may select a camera to obtain an image from among the plurality of cameras included in the camera module 320, based on the zoom magnification.

In an embodiment, the camera selection unit 420 may identify a zoom magnification range within which the zoom magnification obtained by the input falls. For example, the camera module 320 may include a first camera 321, a (2-1)th camera, a (2-2)th camera, and a(2-3)th camera. The camera selection unit 420 may, in case that the zoom magnification falls within the first zoom magnification range, select the first camera 321 as the camera for obtaining an image. The camera selection unit 420 may, in case that the zoom magnification falls within the (2-1)th zoom magnification range, select the (2-1)th camera as the camera for obtaining an image. The camera selection unit 420 may, in case that the zoom magnification falls within the (2-2)th zoom magnification range, select the (2-2)th camera as the camera for obtaining an image. The camera selection unit 420 may, in case that the zoom magnification falls within the (2-3)th zoom magnification range, select the (2-3)th camera as the camera for obtaining an image.

In an embodiment, the image obtainment unit 430 may obtain an image through the camera selected by the camera selection unit 420.

In an embodiment, the image obtainment unit 430 may, in case that the first camera 321 is selected as the camera for obtaining an image, obtain an image by using the first camera 321. For example, the image obtainment unit 430 may, in case that the zoom magnification falls within the first zoom magnification range, move a lens of the first camera 321 to a position corresponding to the zoom magnification (e.g., may control an operation of moving the lens of the first camera 321). The image obtainment unit 430 may obtain an image through the first camera 321 while the lens of the first camera 321 is moving to the position corresponding to the zoom magnification or after the lens of the first camera 321 has been moved to the position corresponding to the zoom magnification. However, it is not limited thereto. A method in which the image obtainment unit 430 obtains an image through the first camera 321 will be described in detail below.

In an embodiment, the image obtainment unit 430 may, in case that the second camera 322 is selected as the camera for obtaining an image, obtain an image by using the second camera 322. For example, the image obtainment unit 430 may, in case that the (2-1)th camera is selected as the camera for obtaining an image, obtain an image by using the (2-1)th camera. The image obtainment unit 430 may, in case that the (2-2)th camera is selected as the camera for obtaining an image, obtain an image by using the (2-2)th camera. The image obtainment unit 430 may, in case that the (2-3)th camera is selected as the camera for obtaining an image, obtain an image by using the (2-3)th camera.

In an embodiment, the cropping unit 440 may perform a crop operation for the image obtained through the camera module 320.

In an embodiment, the cropping unit 440 may determine a ratio (a "first ratio" to be described below) for cropping the image obtained through the camera module 320, and may crop the image based on the determined ratio. A method by which the cropping unit 440 determines a ratio for cropping the image obtained through the camera module 320 will be described in detail below.

FIG. 4 shows that the processor 340 includes the zoom magnification obtainment unit 410, the camera selection unit 420, the image obtainment unit 430, and the cropping unit 440, but is not limited thereto. For example, the processor 340 may further include a component for displaying a cropped image through the display module 310. For example, at least two of the zoom magnification obtainment unit 410, the camera selection unit 420, the image obtainment unit 430, and the cropping unit 440 may be integrally configured.

The electronic device 301 according to an embodiment may include a first camera 321 configured to support an optical zoom, and at least one processor 340 operatively connected to the first camera. The at least one processor 340 may be configured to increase a zoom magnification based on an input. The at least one processor 340 may be configured to, based on the zoom magnification falling within a first zoom magnification range corresponding to the first camera 321, obtain a first image by using the first camera 321 at a first position of a lens of the first camera 321 while the lens of the first camera 321 is being moved to a position corresponding to the zoom magnification. The at least one processor 340 may be configured to determine a first ratio for cropping the obtained first image based on an optical zoom magnification corresponding to the first position and the zoom magnification. The at least one processor 340 may be configured to obtain a second image by cropping, based on the first ratio, the first image.

In an embodiment, the at least one processor 340 may be configured to, based on the zoom magnification falling within the first zoom magnification range corresponding to the first camera 321, identify whether a rate at which the zoom magnification is increased exceeds the first rate, based on identifying that the rate at which the zoom magnification is increased exceeds the first rate, control an optical zoom magnification of the first camera 321 to be increased at the first rate, and obtain the first image by using the first camera 321 at the first position of the lens of the first camera 321 while the lens of the first camera 321 is being moved to the position corresponding to the zoom magnification.

In an embodiment, the at least one processor 340 may be configured to, based on identifying that the rate at which the zoom magnification is increased is less than or equal to the first rate, control the optical zoom magnification of the first camera 321 to be increased at a rate identical to the rate at which the zoom magnification is increased, and obtain an image through the first camera 321 while the optical zoom magnification is increased at the rate identical to the rate at which the zoom magnification is increased.

In an embodiment, the at least one processor 340 may be configured to, in case that an input is received to capture an image while the lens of the first camera 321 is being moved to the position corresponding to the zoom magnification, obtain an image by using the first camera 321 after the lens of the first camera 321 has been moved to the position corresponding to the zoom magnification.

In an embodiment, the electronic device 301 may further include one or more second cameras 322 having different focal lengths, and the at least one processor 340 may be configured to identify a zoom magnification range within which the zoom magnification falls, from among the first zoom magnification range and one or more zoom magnification ranges corresponding to the one or more second cameras 322, and select a camera corresponding to the identified zoom magnification range as a camera for obtaining an image, from among the first camera 321 and the one or more second cameras 322.

In an embodiment, the at least one processor 340 may be configured to decrease the zoom magnification based on an input, based on the decreased zoom magnification falling within the first zoom magnification range, obtain the image by using the first camera 321 in a state where the lens of the first camera 321 has been moved to the position corresponding to a minimum zoom magnification of the first zoom magnification range, determine, based on the minimum zoom magnification and the decreased zoom magnification, the first ratio for cropping the obtained image, and obtain an image to be displayed through the display module 310 of the electronic device 301 by cropping, based on the first ratio, the obtained image.

In an embodiment, the at least one processor 340 may be configured to, in case that the zoom magnification is decreased in a second zoom magnification range including zoom magnifications greater than a maximum zoom magnification of the first zoom magnification range, identify whether a rate at which the zoom magnification is decreased is greater than the first rate, based on identifying the rate at which the zoom magnification is decreased being greater than the first rate, control the lens of the first camera 321 to be moved to a position corresponding to the minimum zoom magnification of the first zoom magnification range at a speed corresponding to a second rate is greater than the first rate, before the zoom magnification is decreased to the maximum zoom magnification of the first zoom magnification range, and obtain the image by using the first camera 321 in a state where the lens of the first camera 321 is moved to the position corresponding to the minimum zoom magnification.

In an embodiment, the at least one processor 340 may be configured to, based on identifying that the rate at which the zoom magnification is decreased is less than or equal to the first rate, control the optical zoom magnification of the first camera 321 to be increased at a rate identical to the rate at which the zoom magnification is decreased, and obtain the image through the first camera 321 while the optical zoom magnification is decreased at the rate identical to the rate at which the zoom magnification is decreased.

In an embodiment, the electronic device 301 may include a first camera 321 configured to support an optical zoom, and at least one processor 340 operatively connected to the first camera. The at least one processor 340 may be configured to decrease a zoom magnification based on an input. The at least one processor 340 may be configured to, based on the decreased zoom magnification falling within the first zoom magnification range, obtain a first image by using the first camera 321 in a state where the lens of the first camera 321 has been moved to a position corresponding to a minimum zoom magnification of the first zoom magnification range. The at least one processor 340 may be configured to determine the first ratio for cropping the obtained image based on the minimum zoom magnification and the decreased zoom magnification. The at least one processor 340 may be configured to obtain a second image by cropping, based on the first ratio, the obtained first image.

In an embodiment, the at least one processor 340 may be configured to, in case that the zoom magnification is decreased in a second zoom magnification range including zoom magnifications greater than a maximum zoom magnification of the first zoom magnification range, identify whether a rate at which the zoom magnification is decreased is greater than the first rate, based on identifying that the rate at which the zoom magnification is decreased is greater than the first rate, control the lens of the first camera 321 to be moved to a position corresponding to the minimum zoom magnification of the first zoom magnification range at a speed corresponding to a second rate greater than the first rate, before the zoom magnification is decreased to the maximum zoom magnification of the first zoom magnification range, and obtain the first image by using the first camera 321 in a state where the lens of the first camera 321 is moved to the position corresponding to the minimum zoom magnification.

In an embodiment, the at least one processor 340 may be configured to, based on identifying that the rate at which the zoom magnification is decreased is less than or equal to the first rate, control the optical zoom magnification of the first camera 321 to be increased at a rate identical to the rate at which the zoom magnification is decreased, and obtain the image through the first camera 321 while the optical zoom magnification is decreased at the rate identical to the rate at which the zoom magnification is decreased.

In an embodiment, the at least one processor 340 may be configured to increase the zoom magnification based on an input, based on the increased zoom magnification falling within the first zoom magnification range, obtain an image by using the first camera 321 at a first position of the lens of the first camera 321 while the lens of the first camera 321 is being moved to a position corresponding to the zoom magnification, based on the zoom magnification and an optical zoom magnification corresponding to the first position, determine a first ratio for cropping the obtained image, and obtain an image to be displayed through the display module 310 of the electronic device 301 by cropping, based on the first ratio, the image.

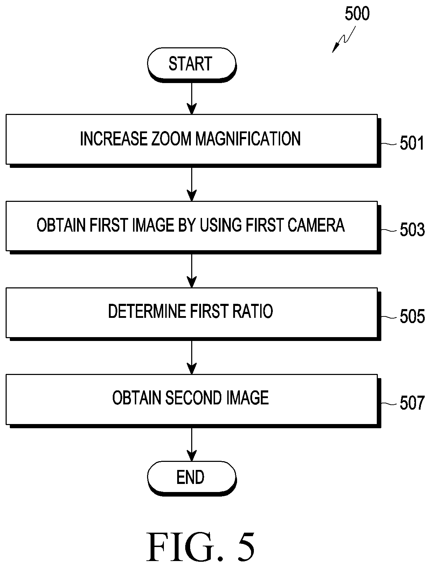

FIG. 5 is a flowchart 500 illustrating a method for providing an image according to an embodiment.

In an embodiment, FIG. 5 may be a diagram illustrating an operation of obtaining an image in case the zoom magnification is increased based on an input.

Referring to FIG. 5, in operation 501, in an embodiment, the processor 340 may increase a zoom magnification (e.g., a zoom magnification of a camera), based on an input.

In an embodiment, the processor 340 may display, through the display module 310, a screen including an object for setting a zoom magnification while a camera application is executed (e.g., while a preview is displayed). The processor 340 may increase, based on a user input for the object, the zoom magnification.

In an embodiment, the processor 340 may increase the zoom magnification, based on a pinch-out input with respect to the display module 310 while a preview is displayed.

In an embodiment, the processor 340 may increase the zoom magnification, based on an input with respect to a physical key of the electronic device 301 while a preview is displayed.

However, a method for increasing a zoom magnification based on a user input is not limited to the examples described above. In addition, in the above-described examples, it is exemplified that the zoom magnification is increased according to a user input, but the method is not limited thereto. For example, the processor 340 may increase the zoom magnification, based on a designated input (e.g., a distance between the camera module 320 and a subject or an input received from an external electronic device) in addition to the user input.

In operation 503, in an embodiment, the processor 340 may, based on the zoom magnification (e.g., the zoom magnification increased in operation 501) falling within a first zoom magnification range (e.g., a first zoom magnification by which the first camera 321 is selected as a camera configured to obtain an image) corresponding to the first camera 321, obtain a first image by using the first camera 321 at a first position of the lens of the first camera 321 while the lens of the first camera 321 is being moved to a position corresponding to the zoom magnification.

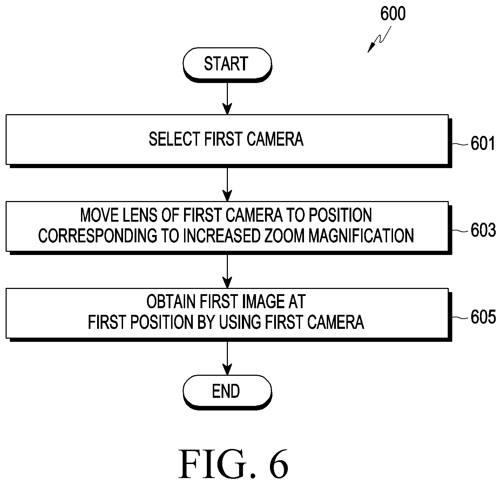

Hereinafter, operation 503 will be described in detail with reference to FIGS. 6 to 8.

FIG. 6 is a flowchart 600 illustrating a method for obtaining an image through a first camera 321 according to an embodiment.

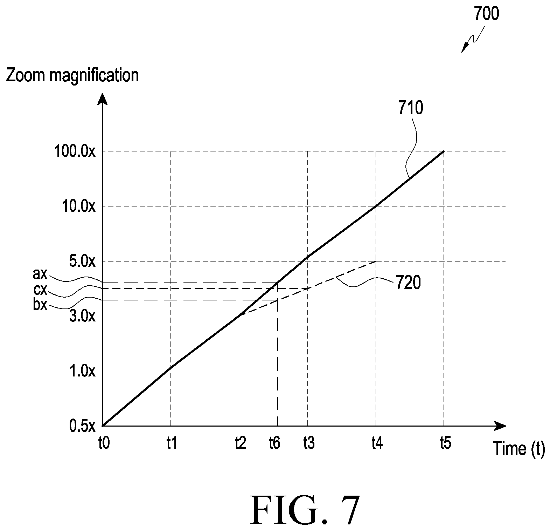

FIG. 7 is a diagram 700 illustrating a method for obtaining an image through a first camera 321 according to an embodiment.

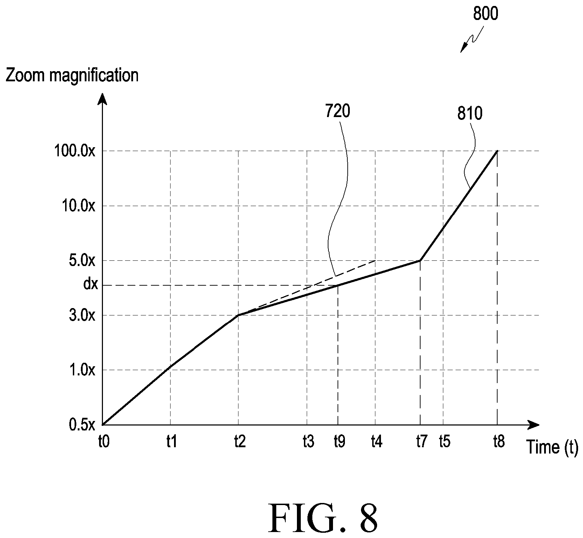

FIG. 8 is a diagram 800 illustrating a method for obtaining an image through a first camera 321 according to an embodiment.

Referring to FIGS. 6 to 8, in operation 601, in an embodiment, the processor 340 may, based on the zoom magnification (e.g., the zoom magnification increased in operation 501) falling within a first zoom magnification range (e.g., a zoom magnification range of greater than or equal to 3 times (3.0x) and less than 5 times (5.0x)) corresponding to the first camera 321, select the first camera 321 as a camera for obtaining an image.

According to an embodiment, in FIG. 7, a line 710 may indicate a zoom magnification increased as a time t elapses. The processor 340 may select a (2-1)th camera as a camera for obtaining an image, in a time period (e.g., a time period from t0 to t1) in which the zoom magnification falls within a (2-1)th zoom magnification range (e.g., a (2-1)th zoom magnification range set to obtain an image through the (2-1)th camera) (e.g., a zoom magnification range of greater than or equal to 0.5 times (0.5x) and less than 1 times (1.0x)) corresponding to the (2-1)th camera. The processor 340 may select a (2-2)th camera as a camera for obtaining an image, in a time period (e.g., a time period from t1 to t2) in which the zoom magnification falls within a (2-2)th zoom magnification range (e.g., a zoom magnification range of greater than or equal to 1 times (1.0x) and less than 3 times (3.0x)) corresponding to the (2-2)th camera. The processor 340 may select a first camera 321 as a camera for obtaining an image, in a time period (e.g., a time period from t2 to t3) in which the zoom magnification falls within a first zoom magnification range (e.g., a zoom magnification range of greater than or equal to 3 times (3.0x) and less than 5 times (5.0x)) corresponding to the first camera 321. The processor 340 may select a (2-3)th camera as a camera for obtaining an image, in a time period (e.g., a time period from t3 to t5) in which the zoom magnification falls within a (2-3)th zoom magnification range (e.g., a zoom magnification range of greater than or equal to 5 times (5.0x) and less than 100 times (100.0x)) corresponding to the (2-3)th camera.

In operation 603, in an embodiment, the processor 340 may, based on selecting the first camera 321 as a camera for obtaining an image, move a lens of the first camera 321 to a position corresponding to the increased zoom magnification. For example, the processor 340 may, based on selecting the first camera 321 as a camera for obtaining an image, perform an operation of moving the lens of the first camera 321 to the position corresponding to the increased zoom magnification.

In an embodiment, a rate at which the zoom magnification is changed may be greater than a rate at which the zoom magnification of the first camera 321 corresponding to the position of the lens of the first camera 321 is changed while the lens of the first camera 321 is being moved (hereinafter the zoom magnification of the first camera 321 corresponding to the position of the lens of the first camera 321 is referred to as an "optical zoom magnification" or "optical zoom magnification of the first camera 321"). In an embodiment, the rate at which the zoom magnification is changed may be equal to or less than the rate at which the optical zoom magnification is changed. In an embodiment, the optical zoom magnification of the first camera 321 may be a zoom magnification at which the first camera 321 obtains an image by using the optical zoom or a zoom magnification corresponding to the position of the lens of the first camera 321 when an image is obtained by the first camera 321.

In an embodiment, the rate at which the zoom magnification is changed may be referred to as a value defined by dividing an amount of zoom magnification that is changed during a time period when an input for changing the zoom magnification is received, by a time when an input for changing the zoom magnification is received. In an embodiment, the rate at which the zoom magnification is changed may be referred to as an amount of the zoom magnification changed per unit of time (per second) while the zoom magnification is being changed by a user input. For example, in FIG. 7, a rate at which the zoom magnification is changed at each time t may correspond to a slope of a line 710 at the time t.

In an embodiment, the rate at which the zoom magnification is changed may correspond to a value defined by dividing an amount by which the optical zoom magnification is changed, by a time during which the position of the lens of the first camera 321 is changed, while the processor 340 moves the lens of the first camera 321 to the position corresponding to the changed zoom magnification according to a change of the zoom magnification. In an embodiment, the rate at which the optical zoom magnification is changed may be referred to as an amount of the optical zoom magnification changed per unit of time (per second) while the processor 340 moves the lens of the first camera 321 to the position corresponding to the changed zoom magnification.

In an embodiment, the rate at which the optical zoom magnification is changed (increased) may be equal to or less than a designated rate (hereinafter, referred to as a "first rate"), based on an optical property associated with an image obtained through the first camera 321. For example, in case that the lens of the first camera 321 is moved to the position corresponding to the changed zoom magnification according to the zoom magnification change (e.g., increase) at a speed faster than a speed (e.g., a moving speed of the lens of the first camera 321 corresponding to the first rate) corresponding to the first rate, a difference may occur between an exposure time for obtaining an upper portion of an image obtained through the first camera 321 and an exposure time for obtaining a lower portion of the image. In this case, an image obtained through the first camera 321 may be degraded. In order to minimize the image degradation, the processor 340 may designate (e.g., set) the first rate. In an embodiment, in case that the first rate is designated, the processor 340 may control the rate at which the optical zoom magnification is changed so as to cause the optical zoom magnification to be changed at a rate equal to or less than the first rate. However, although the above example describes specifying the first rate based on optical properties such as exposure time, it is not limited thereto. For example, the processor 340 may designate the first rate based on a noise (e.g., a noise level) which may be generated by the movement of the lens of the first camera 321 (e.g., to cause the noise level generated by the movement of the lens of the first camera 321 to be less than a designated level), in addition to the optical property.

In an embodiment, in FIGS. 7 and 8, a line 720 may indicate the optical zoom magnification changed by the first rate in the first zoom magnification range.

In an embodiment, in FIG. 7, the processor 340 may, in case that the rate (e.g., a slope of the line 710 in a time period from a time t2 to a time t3) at which the zoom magnification (e.g., the zoom magnification increased based on an input in operation 501) is changed (e.g., increased) is greater than the first rate (e.g., a slope of the line 720), change (e.g., increase) the optical zoom magnification at the first rate.

In an embodiment, in FIG. 7, the processor 340 may, in case that the zoom magnification is increased from 3 times (3.0x) to 5 times (5.0x) at a rate greater than the first rate in a time period from a time t2 to a time t3, increase the optical zoom magnification from 3 times (3.0x) to c times (cx) at the first rate. For example, the processor 340 may move the position of the lens of the first camera 321 from a position corresponding to an optical zoom magnification of 3 times (3.0x) to a position corresponding to an optical zoom magnification of c times (cx) while the zoom magnification is increased from 3 times (3.0x) to 5 times (5.0x) in a time period from a time t2 to a time t3 (e.g., may control an operation of moving the position of the lens of the first camera 321).

In an embodiment, the processor 340 may, in case that the zoom magnification increases in the (2-3)th zoom magnification range (e.g., in case that the zoom magnification increases from the first zoom magnification range to the (2-3)th zoom magnification range), cause the lens of the first camera 321 to be moved to a position corresponding to a maximum zoom magnification (e.g., five times (5.0x)) of the first zoom magnification range, as shown as the line 720 in a time period from a time t3 to a time t4 in FIG. 7. However, it is not limited thereto. For example, the processor 340 may, in case that the camera for obtaining an image at the time t3 is changed from the first camera 321 to the (2-3)th camera due to an increase of the zoom magnification with time t, cause the lens of the first camera 321 to maintain a position corresponding to the c times (cx) magnification.

According to an embodiment, in FIG. 8, a line 810 may indicate a zoom magnification increased as a time t elapses. The processor 340 may, in case that the rate (e.g., a slope of the line 810 in a time period from a time t2 to a time t7) at which the zoom magnification (e.g., the zoom magnification increased based on an input in operation 501) is changed (e.g., increased) is equal to or less than the first rate (e.g., a slope of the line 720), change (e.g., increase) the optical zoom magnification at a rate identical to the rate at which the zoom magnification is changed. For example, in FIG. 8, the processor 340 may move the position of the lens of the first camera 321 from a position corresponding to an optical zoom magnification of 3 times (3.0x) to a position corresponding to an optical zoom magnification of 5 times (5.0x) while the zoom magnification is increased from 3 times (3.0x) to 5 times (5.0x) in a time period from a time t2 to a time t7 (e.g., may control an operation of moving the position of the first camera 321).

In an embodiment, in FIG. 8, the (2-3)th camera may be selected as a camera for obtaining an image, in a time period (e.g., a time period from t7 to t8) in which the zoom magnification falls within the (2-3)th zoom magnification range (e.g., a zoom magnification range of greater than or equal to 5 times (5.0x) and less than 100 times (100.0x)) corresponding to the (2-3)th camera.

In operation 605, the processor 340 may obtain a first image by using the first camera 321 at the first position of the lens of the first camera 321.

In an embodiment, the processor 340 may obtain an image by using a camera selected through operation 601. For example, the processor 340 may obtain an image by using a camera selected from among the first camera 321, the (2-1)th camera, the (2-2)th camera, and the (2-3)th camera.

In an embodiment, the processor 340 may obtain an image (hereinafter, an image obtained through the first camera 321 is referred to as a "first image") by using the first camera 321 while the lens of the first camera 321 is being moved in operation 603.

In an embodiment, the processor 340 may obtain an image by using the first camera 321 at a current position (hereinafter, referred to as a "first position") of the lens of the first camera 321 while the lens of the first camera 321 is being moved. The first position may correspond to a position of the lens of the first camera 321 at a time (e.g., timing for obtaining an image) configured to cause the camera module 320 to obtain an image while the lens of the first camera 321 is being moved. For example, in FIG. 7, the processor 340 may obtain the first image by using the first camera 321 at the time t6 at a position of the lens of the first camera 321 corresponding to the optical zoom magnification of b times (bx). For example, in FIG. 8, the processor 340 may obtain the first image by using the first camera 321 at the time t9 at a position of the lens of the first camera 321 corresponding to the optical zoom magnification of d times (dx).

In an embodiment, as shown through FIG. 8, the processor 340 may, in case that the rate at which the zoom magnification is increased is equal to or less than the first rate, obtain the first image through the first camera 321 while the optical zoom magnification is changed (e.g., increased) at a rate identical to the rate at which the zoom magnification is changed.

Referring to FIG. 5, in an embodiment, the processor 340 may determine a first ratio for cropping the first image, based on the increased zoom magnification and the optical zoom magnification corresponding to the first position of the lens of the first camera 321.

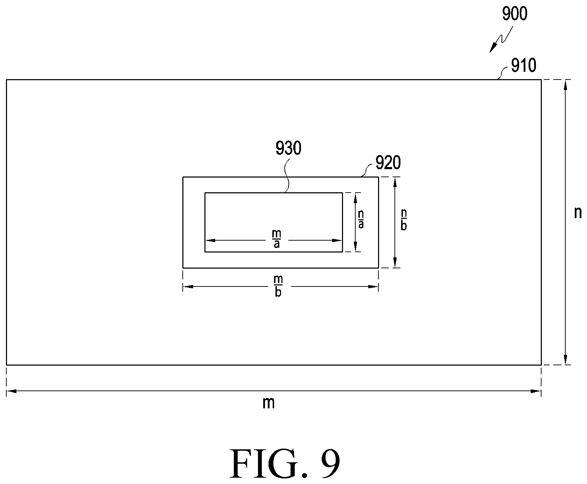

In an embodiment, the processor 340 may, in case that the increased zoom magnification (e.g., a current zoom magnification) is greater than the optical zoom magnification (e.g., the zoom magnification at which the first image is obtained), determine a crop ratio (e.g., a ratio to crop the first image) (hereinafter, referred to as a "first ratio") for a digital zoom with respect to the first image obtained by using the optical zoom, in order to obtain an image (hereinafter, referred to as a "second image") corresponding to the increased zoom magnification. Hereinafter, with reference to FIG. 9, a method for determining the first ratio will be described in detail.

FIG. 9 is a diagram 900 illustrating a method for determining a first ratio according to an embodiment.

Referring to FIG. 9, in an embodiment, the processor 340 may determine a first ratio for cropping the first image, based on the increased zoom magnification (e.g., the current zoom magnification) and the optical zoom magnification of the first camera 321 corresponding to the first position of the lens of the first camera 321. For example, the processor 340 may determine the first ratio to crop the first image by using [Equation 1] below.

[Equation 1]

$$\text{First ratio} = \text{Zoom magnification} / \text{Optical zoom magnification}$$

In an embodiment, in [Equation 1], the zoom magnification (also, referred to as "target zoom ratio") may correspond to a current zoom magnification (e.g., an increased zoom magnification). In [Equation 1], the optical zoom magnification (also, referred to as "optical zoom ratio") may be a zoom magnification corresponding to the position of the lens of the first camera 321 when the first image is obtained. In [Equation 1], the first ratio may also be referred to as a "residual crop ratio". In an embodiment, the processor 340 may determine (calculate) the first ratio by dividing the zoom magnification by the optical zoom magnification, by using [Equation 1].

In an embodiment, in FIG. 9, reference numeral 910 may represent a first scene indicating an image obtained through the (2-2)the camera when the zoom magnification is 1 times (1.0x). A horizontal length and vertical length of the first scene may be m and n, respectively. Reference numeral 920 may represent a second scene indicating the first image obtained with optical zoom magnification of b times (bx) at the time t6 in FIG. 7. A horizontal length and vertical length of the second scene may be m/b and n/b, respectively. Reference numeral 930 may be a third scene corresponding to the optical zoom magnification of a times (ax) at the time t6 in FIG. 7. A horizontal length and vertical length of the third scene may be m/a and n/a, respectively.

In an embodiment, in FIG. 9, the processor 340 may determine the first ratio as a/b by using [Equation 1] in order to obtain the second image presenting the third scene. For example, the processor 340 may determine the first ratio as a/b, using Equation 1, to obtain the second image representing the third scene having a horizontal length and a vertical length corresponding to b/a of each of the horizontal length and vertical length of the second scene by cropping the first image.

In an embodiment, the processor 340 may, in case that the first image is obtained through the first camera 321 while the optical zoom magnification is changed (e.g., increased) at a rate identical to the rate at which the zoom magnification is changed as shown through FIG. 8, not perform the digital zoom. For example, the processor 340 may, in case that the rate at which the zoom magnification is changed (e.g., increased) is equal to or less than the first rate, not perform an operation of determining the first ratio for performing the digital zoom and operation of cropping the first image.

In an embodiment, the processor 340 may, in case that an image is obtained through the second camera 322, perform a cropping operation (e.g., a digital zoom operation with respect to an image obtained through the second camera 322) with respect to an image obtained through the second camera 322 to obtain an image corresponding to the zoom magnification (e.g., the current zoom magnification). For example, the processor 340 may, in case that an image is obtained through the (2-1)th camera, perform the digital zoom with respect to the image obtained at a focal length (e.g., a focal length corresponding to a minimum zoom magnification of 0.5 times (0.5x) of the (2-1)th zoom magnification range ) of the lens of the (2-1) camera to obtain an image corresponding to the zoom magnification falling within the (2-1)th zoom magnification. For example, the processor 340 may, in case that an image is obtained through the (2-2)th camera, perform a digital zoom with respect to the image obtained at a focal length (e.g., a focal length corresponding to a minimum zoom magnification of 1.0 times (1.0x) of the (2-2)th zoom magnification range ) of the lens of the (2-2) camera to obtain an image corresponding to the zoom magnification falling within the (2-2)th zoom magnification. For example, the processor 340 may, in case that an image is obtained through the (2-3)th camera, perform a digital zoom with respect to the image obtained at a focal length (e.g., a focal length corresponding to a minimum zoom magnification of 5.0 times (5.0x) of the (2-3)th zoom magnification range ) of the lens of the (2-3) camera to obtain an image corresponding to the zoom magnification falling within the (2-3)th zoom magnification. However, it is not limited thereto. For example, the processor 340 may, in case that the zoom magnification falls with the (2-3)th zoom magnification range and the lens of the first camera 321 is positioned at a position corresponding to a minimum zoom magnification of 5 times (5.0x) in the (2-3)th zoom magnification range, perform the digital zoom with respect to an image obtained through the first camera to obtain an image corresponding to a zoom magnification falling within the (2-3)th zoom magnification range.

In operation 507, in an embodiment, the processor 340 may obtain the second image by cropping, based on the first ratio, the first image.

In an embodiment, the processor 340 may, in case that the first ratio is determined by performing operation 505, obtain the second image by cropping, based on the first ratio, the first image.

In an embodiment, the second image may correspond to a preview image displayed through the display module 310. For example, the processor 340 may display the second image as the preview image through the display module 310.

In an embodiment, the processor 340 may, in case that the crop operation with respect to the first image obtained through the first camera 321 is not performed (e.g., the first image is obtained through the first camera 321 while the optical zoom magnification is changed (e.g., increased) at a rate identical to the rate at which the zoom magnification is changed as shown through FIG. 8), display the obtained first image as the preview image through the display module 310.

In an embodiment, the processor 340 may, in case that an image obtained through the second camera 322 is cropped based on the zoom magnification, display the cropped image as the preview image through the display module 310.

In an embodiment, the processor 340 may obtain a capture image, based on an input (e.g., a user input for pressing a shutter), while displaying the preview image.

In an embodiment, the processor 340 may, in case that the zoom magnification and the optical zoom magnification are different from each other when the input for obtaining the capture image is input, move the lens of the first camera 321 to a position corresponding to the optical zoom magnification such that the optical zoom magnification is equal to the zoom magnification, and then obtain the capture image through the first camera 321. In an embodiment, the processor 340 may, in case that the input for obtaining the capture image is input at the time t6 in FIG. 7, move the lens of the first camera 321 to a position corresponding to the optical zoom magnification equal to the zoom magnification a times (ax) such that the optical zoom magnification is equal to the zoom magnification a times (ax), and then obtain the captured image through the first camera 321. However, it is not limited thereto. For example, the processor 340 may, in case that the zoom magnification and the optical zoom magnification are different from each other when the input for obtaining the capture image is inputted, may obtain a capture image, in the same or similar manner to the examples of obtaining the second image through operation 501 to operation 507, through the crop operation with respect to the image obtained at the current position of the lens of the first camera 321 (e.g., by using all of the optical zoom and the digital zoom). For example, the processor 340 may, in case that the zoom magnification and the optical zoom magnification are different from each other when the input for obtaining the capture image is input and the second image is obtained as the preview image when the input for obtaining the capture image is input, obtain the second image as the capture image.

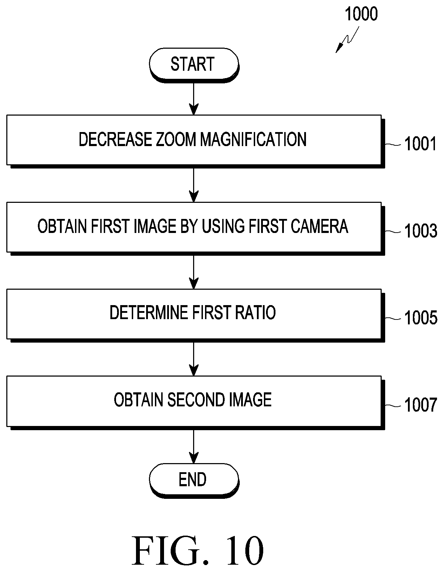

FIG. 10 is a flowchart 1000 illustrating a method for providing an image according to an embodiment.

In an embodiment, FIG. 10 may be a diagram illustrating an operation of obtaining an image in case that a zoom magnification is decreased based on an input.

Referring to FIG. 10, in operation 1001, in an embodiment, the processor 340 may decrease a zoom magnification (e.g., a zoom magnification of a camera), based on an input.

In an embodiment, the processor 340 may display, through the display module 310, a screen including an object for setting (e.g., changing) a zoom magnification while a camera application is executed (e.g., while a preview is displayed). The processor 340 may decrease, based on a user input for the object, the zoom magnification.

In an embodiment, the processor 340 may decrease the zoom magnification based on a pinch-in input with respect to the display module 310 while a preview is displayed.

In an embodiment, the processor 340 may decrease the zoom magnification based on an input with respect to a physical key of the electronic device 301 while a preview is displayed.

However, a method for decreasing a zoom magnification based on a user input is not limited to the examples described above. In addition, in the above-described examples, it is exemplified that the zoom magnification is decreased according to a user input, but the method is not limited thereto. For example, the processor 340 may decrease the zoom magnification, based on a designated input (e.g., a distance between the camera module 320 and a subject or an input received from an external electronic device) in addition to the user input.

In operation 1003, in an embodiment, the processor 340 may, based on the zoom magnification falling within the first zoom magnification range corresponding to the first camera 321, obtain the first image by using the first camera 321 in a state where the lens of the first camera 321 has been moved to a position corresponding to a minimum zoom magnification of the first zoom magnification range.

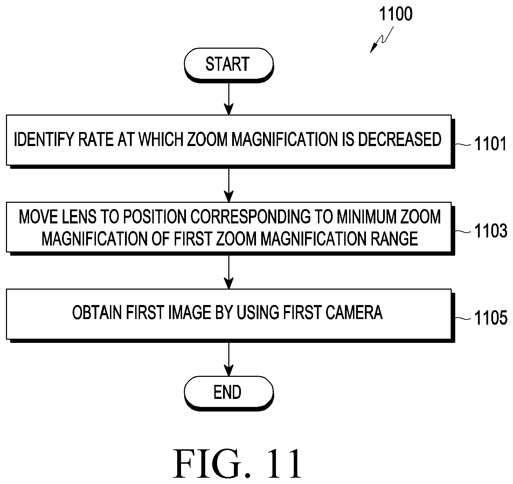

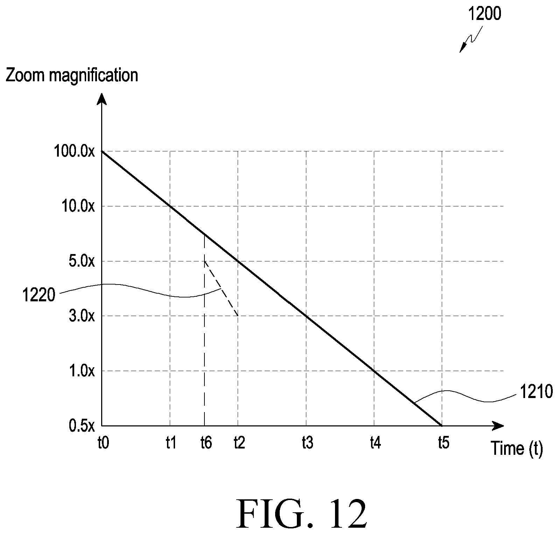

Hereinafter, operation 1003 will be described in detail with reference to FIGS. 11 and 12.

FIG. 11 is a flowchart 1100 illustrating a method for obtaining an image through a first camera 321 according to an embodiment.

FIG. 12 is a diagram 1200 illustrating a method for obtaining an image through a first camera 321 according to an embodiment.

Referring to FIGS. 11 and 12, in operation 1101, in an embodiment, the processor 340 may identify a rate at which the zoom magnification is decreased.

In an embodiment, the processor 340 may, in case that the zoom magnification is decreased, identify a zoom magnification range within which the decreased zoom magnification falls. The processor 340 may select, as a camera for obtaining an image, a camera corresponding to the zoom magnification range within which the decreased zoom magnification falls.

According to an embodiment, in FIG. 12, a line 1210 may indicate a zoom magnification decreased as a time t is decreased. The processor 340 may select the (2-3)th camera as a camera for obtaining an image, in a time period (e.g., a time period from t0 to t2) in which the zoom magnification falls within the (2-3)th zoom magnification range (e.g., a zoom magnification range of greater than or equal to 5 times (5.0x) and less than 100 times (100.0x)) corresponding to the (2-3)th camera. The processor 340 may select a first camera 321 as a camera for obtaining an image, in a time period (e.g., a time period from t2 to t3) in which the zoom magnification falls within a first zoom magnification range (e.g., a zoom magnification range of greater than or equal to 3 times (3.0x) and less than 5 times (5.0x)) corresponding to the first camera. The processor 340 may select a (2-2)th camera as a camera for obtaining an image, in a time period (e.g., a time period from t3 to t4) in which the zoom magnification falls within a (2-2)th zoom magnification range (e.g., a zoom magnification range of greater than or equal to 1 times (3.0x) and less than 3 times (3.0x)) corresponding to the (2-2)th camera. The processor 340 may select a (2-1)th camera as a camera for obtaining an image, in a time period (e.g., a time period from t4 to t5) in which the zoom magnification falls within a (2-1)th zoom magnification range (e.g., a (2-1)th zoom magnification range set to obtain an image through the (2-1)th camera) (e.g., a zoom magnification range of greater than or equal to 0.5 times (0.5x) and less than 1 times (1.0x)) corresponding to the (2-1)th camera.

In an embodiment, a slope of the line 1210 may indicate a rate at which the zoom magnification is decreased.

In an embodiment, a maximum speed capable of moving the lens of the first camera 321 may be determined by a limitation of performance of an actuator (and a driving motor for a movement of the actuator) configured to move the lens of the first camera 321. **In** an embodiment, the processor 340 may, in case that the lens of the first camera 321 is moved at the maximum speed (e.g., a constant speed determined by the limitation of the performance of the actuator configured to move the lens of the first camera 321) at which the lens of the first camera 321 may be moved, select, as a second rate, a rate, at which the optical zoom magnification is changed, which corresponds to the maximum speed at which the lens of the first camera 321 is moved. However, it is not limited thereto. For example, in case that the lens of the first camera 321 is moved at the maximum speed at which the lens of the first camera 321 can be moved, a noise greater than or equal to a designated level may be generated. In case that the noise greater than or equal to the designated level is generated, a noise generated during video recording may be recorded. The processor 340 may also set, as the second rate, a rate slower than the rate at which the optical zoom magnification is changed in case that the lens of the first camera 321 is moved at the maximum speed at which the lens of the first camera 321 can be moved so as to cause a noise less than the designated level to be generated when the lens of the first camera 321 is moved. In an embodiment, the second rate may be greater than or equal to the first rate. For example, the first speed may be set by considering optical properties associated with image quality, such as exposure time, while the second speed may be set by considering performance (and noise) of the actuator that moves the lens of the first camera 321, without considering the optical properties. Accordingly, the second rate may be set to be greater than the first rate.

In an embodiment, in FIG. 12, a slope of the line 1220 may indicate the second rate at which the optical zoom magnification is decreased.

In an embodiment, the second rate may be greater than the first rate. For example, an absolute value of the slope of the line 1220 may be greater than an absolute value of the slope of the line 720 in FIG. 7 (and FIG. 8).

In an embodiment, the processor 340 may, in case that the zoom magnification is decreased within the (2-3)th zoom magnification range, identify a rate at which the zoom magnification is decreased before the zoom magnification is decreased to the minimum zoom magnification (or the maximum zoom magnification of the first zoom magnification range) (e.g., 5 times (5.0x)) of the (2-3)th zoom magnification range.

In an embodiment, the processor 340 may, based on a predicted time (e.g., a time predicted by the processor 340) (e.g., the time t2) at which the decreased zoom magnification becomes the minimum zoom magnification (e.g., 5 times (5.0x)) in the (2-3)th zoom magnification range and the second rate (e.g., the slope of the line 1220), determine a time (e.g., the time t6) identifying a rate at which the zoom magnification is decreased so as to determine a rate at which the optical zoom magnification is decreased. The processor 340 may identify a rate at which the zoom magnification is decreased at the time (e.g., the time t6 or a time before the time t6) so as to determine a rate at which the optical zoom magnification is decreased. However, it is not limited thereto.

In operation 1103, in an embodiment, the processor 340 may, in case that the rate at which the zoom magnification is decreased is greater than the first rate, move the lens of the first camera 321 to a position corresponding to the minimum zoom magnification (e.g., 3 times (3.0x)) of the first zoom magnification range.

In an embodiment, the processor 340 may, in case that the rate at which the zoom magnification is decreased is greater than the first rate, decrease the optical zoom magnification at the second rate such that the optical zoom magnification becomes the minimum zoom magnification (e.g., 3 times (3.0x)) of the first zoom magnification range. For example, the processor 340 may, in case that the rate at which the zoom magnification is decreased is greater than the first rate, move the lens of the first camera 321 to a position corresponding to the minimum zoom magnification (e.g., 3 times (3.0x)) of the first zoom magnification range at the speed of the lens of the first camera 321 (e.g., the maximum speed at which the lens of the first camera 321 can be moved) corresponding to the second rate. For example, the processor 340 may, in case that it is determined that the rate at which the zoom magnification is decreased is greater than the first rate at a time (e.g., time t6) for determining the rate at which the zoom magnification is decreased, decrease the optical zoom magnification to the second rate, from the time (e.g., the time t6) to the time (e.g., the time t2) when the optical zoom magnification becomes the minimum zoom magnification of the first zoom magnification range (e.g., 3 times (3.0x)).

For example, the processor 340 may, in case that the rate at which the zoom magnification is decreased is greater than the first rate, move the lens of the first camera 321 to the position corresponding to the minimum zoom magnification (e.g., 3 times (3.0x)) of the first zoom magnification range at the speed of the lens of the first camera 321 (e.g., the maximum speed at which the lens of the first camera 321 can be moved) corresponding to the second rate at or before the time (e.g., time t2) at which the zoom magnification is decreased to the maximum zoom magnification of the first zoom magnification range (e.g., 5 times (5.0x)) (or the minimum zoom magnification of the (2-1)th magnification range).

Although not shown in FIG. 12, in an embodiment, the processor 340 may, in case that the rate at which the zoom magnification is decreased is less than or equal to the first rate, decrease the optical zoom magnification at the rate identical to the rate at which the zoom magnification is decreased, from the time when the zoom magnification is decreased to the maximum zoom magnification (e.g., 5 times (5.0x)) of the first zoom magnification range. For example, in case that it is determined that the rate at which the zoom magnification is decreased is less than or equal to the first rate at a time (e.g., time t6) for determining the rate at which the zoom magnification is decreased, the processor 340 may move the lens of the first camera 321 from the time when the zoom magnification is decreased to the maximum zoom magnification (e.g., 5 times (5.0x)) of the first zoom magnification range, such that the optical zoom magnification is decreased at the rate identical to the rate at which the zoom magnification is decreased.

In operation 1105, in an embodiment, the processor 340 may obtain the first image by using the first camera 321 in a state where the lens of the first camera 321 has been moved to the position corresponding to the minimum zoom magnification of the first zoom magnification range.

In an embodiment, in case that, as the line 1220 in FIG. 12, the optical zoom magnification becomes the minimum zoom magnification of the first zoom magnification range, the lens of the first camera 321 is moved to the position corresponding to the minimum zoom magnification of the first zoom magnification range, and the zoom magnification is decreased to fall within the first zoom magnification range, the processor 340 may obtain the first image by using the first camera 321 in a state where the lens of the first camera 321 has been moved to the position.

In an embodiment, in case that the optical zoom magnification is decreased at the rate identical to the rate at which the zoom magnification is decreased from the time when the zoom magnification is decreased to the maximum zoom magnification (e.g., 5 times (5.0x)) of the first zoom magnification range (e.g., it is determined that the rate at which the zoom magnification is decreased is less than or equal to the first rate, and thus the optical zoom magnification is decreased at the rate identical to the rate at which the zoom magnification is decreased), the processor 340 may obtain an image by using the first camera 321 at a current position at the position of the lens of the first camera 321 at the time set to obtain an image through the first camera 321 while the lens of the first camera 321 is being moved.

In an embodiment, the processor 340 may, in case that the zoom magnification falls within the zoom magnification range corresponding to the second camera 322, obtain an image by using the second camera 322.

Referring to FIG. 10, in operation 1005, in an embodiment, the processor 340 may, based on the minimum zoom magnification of the first zoom magnification and the zoom magnification (e.g., the decreased zoom magnification), determine the first ratio for cropping the first image obtained in operation 1003.

In an embodiment, the processor 340 may, in case that the first image is obtained by using the first camera 321 in a state where the lens of the first camera 321 has been moved to the position corresponding to the minimum zoom magnification of the first zoom magnification range, determine the first ratio for cropping the first image by using [Equation 2] below.

First ratio = Zoom magnification/Minimum zoom magnification of first zoom magnification range          [Equation 2]

In an embodiment, the processor 340 may, in case that the first image is obtained through the first camera 321 while the optical zoom magnification is decreased at a rate identical to the rate at which the zoom magnification is decreased, not perform the digital zoom. For example, the processor 340 may, in case that the rate at which the zoom magnification is changed (e.g., increased) is equal to or less than the first rate, not perform an operation of determining the first ratio for performing the digital zoom and operation of cropping the first image.

In an embodiment, the processor 340 may, in case that an image is obtained through the second camera 322, perform a cropping operation with respect to the image obtained through the second camera 322 to obtain an image corresponding to the zoom magnification (e.g., the current zoom magnification).

In operation 1007, in an embodiment, the processor 340 may obtain the second image by cropping, based on the first ratio, the first image.

Operation 1007 is at least partially identical or similar to operation 507 in FIG. 5, and thus the overlapping description will be omitted.

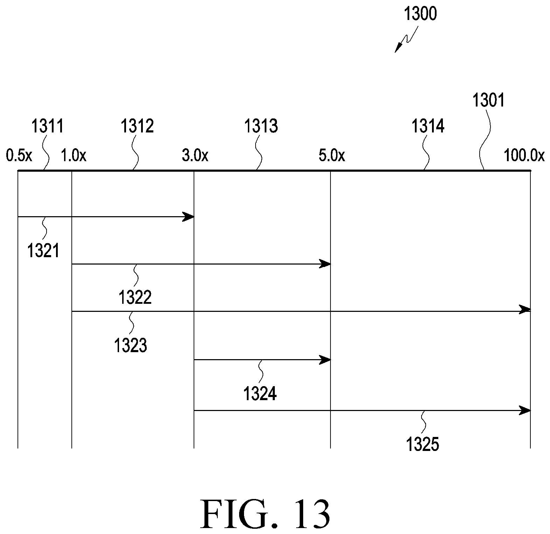

FIG. 13 is a diagram 1300 illustrating a method for providing an image in case that a zoom magnification increases according to an embodiment.

Referring to FIG. 13, in an embodiment, a line 1301 may indicate a zoom magnification range supportable by the camera module 320. For example, the line 1301 may indicate the zoom magnification range from 5 times (5.0x) to 100 times (100.0x), which can be supported by the camera module 320. However, the zoom magnification range indicated by line 1301 is illustrative and not limited thereto.

In an embodiment, the zoom magnification range of the line 1301 may include a (2-1)th zoom magnification range 1311, a (2-2)th zoom magnification range 1312, a first zoom magnification range 1313, and a (2-3)th zoom magnification range 1314.

In an embodiment, an arrow 1321 in FIG. 13 may indicate a case that the zoom magnification is increased from the (2-1)th zoom magnification range 1311 to the (2-2)th zoom magnification range 1312.

In an embodiment, the processor 340 may, in case that the zoom magnification is increased from the (2-1)th zoom magnification range 1311 to the (2-2)th zoom magnification range 1312, change the camera for obtaining an image from the (2-1)th camera corresponding to the (2-1)th zoom magnification range 1311 to the (2-2)th camera corresponding to the (2-2)th zoom magnification range 1312.

In an embodiment, the processor 340 may obtain images by using the (2-1)th camera and the (2-2)th camera within the (2-1)th zoom magnification range 1311 and the (2-2)th zoom magnification range 1312, respectively, while the zoom magnification is increased from the (2-1)th zoom magnification range 1311 to the (2-2)th zoom magnification range 1312. The processor 340 may obtain an image to be displayed through the display module 310 by performing the digital zoom with respect to the obtained image.

In an embodiment, an arrow 1322 in FIG. 13 may indicate a case that the zoom magnification is increased from the (2-2)th zoom magnification range 1312 to the first zoom magnification range 1313.

In an embodiment, the processor 340 may, in case that the zoom magnification is increased from the (2-2)th zoom magnification range 1312 to the first zoom magnification range 1313, perform the digital zoom by using the (2-2)th camera in the (2-2)th zoom magnification range 1312 and perform the optical zoom (and the digital zoom) using the first camera 321 in the first zoom magnification range 1313.

In an embodiment, while the zoom magnification is increased from the (2-2)th zoom magnification range 1312 to the first zoom magnification range 1313, the processor 340 may, based on identifying that the rate at which zoom magnification is increased in the first zoom magnification range 1313 is greater than the first rate, increase the optical zoom magnification at the first rate. The processor 340 may obtain the first image by using the first camera 321 at the first position of the lens of the first camera 321 while the lens of the first camera 321 is being moved to the position corresponding to the increasing zoom magnification. The processor 340 may determine the first ratio based on the increasing zoom magnification (e.g., the current zoom magnification) and the optical zoom magnification corresponding to the first position of the lens of the first camera 321. The processor 340 may obtain the second image by cropping, based on the first ratio, the first image. In an embodiment, in case that the rate at which the zoom magnification is increased in the first zoom magnification range 1313 is greater than the first rate while the zoom magnification is increased from the (2-2)th zoom magnification range 1312 to the first zoom magnification range 1313, the processor 340 may obtain the second image by using both the optical zoom and the digital zoom.

In an embodiment, the processor 340 may, in case that the rate at which zoom magnification is increased in the first zoom magnification range 1313 is less than or equal to the first rate while the zoom magnification is increased from the (2-2)th zoom magnification range 1312 to the first zoom magnification range 1313, increase the optical zoom magnification at the rate identical to the rate at which the zoom magnification is increased. The processor 340 may obtain the first image by using the first camera 321 while the lens of the first camera 321 is being moved to the position corresponding to the increasing zoom magnification. In an embodiment, in case that the rate at which the zoom magnification is increased in the first zoom magnification range 1313 is less than or equal to the first rate while the zoom magnification is increased from the (2-2)th zoom magnification range 1312 to the first zoom magnification range 1313, the processor 340 may obtain an image to be displayed through the display by using only the optical zoom.

In an embodiment, an arrow 1323 in FIG. 13 may indicate a case that the zoom magnification is increased from the (2-2)th zoom magnification range 1312 to the (2-3)th zoom magnification range 1314.

In an embodiment, the processor 340 may, in case that the zoom magnification is increased from the (2-2)th zoom magnification range 1312 to the (2-3)th zoom magnification range 1314, perform the digital zoom using the (2-2)th camera in the (2-2)th zoom magnification range 1312, perform the optical zoom (and the digital zoom) using the first camera 321 in the first zoom magnification range 1313, and perform the digital zoom using the (2-3)th camera in the (2-3)th zoom magnification range 1314.

In an embodiment, an arrow 1324 in FIG. 13 may indicate a case that the zoom magnification is increased within the first zoom magnification range 1313. In an embodiment, in case that the rate at which the zoom magnification is increased in the first zoom magnification range 1313 is greater than the first rate while the zoom magnification is increased in the first zoom magnification range 1313, the processor 340 may obtain the second image by using both the optical zoom and the digital zoom. In an embodiment, in case that the rate at which the zoom magnification is increased in the first zoom magnification range 1313 is less than or equal to the first rate while the zoom magnification is increased to the first zoom magnification range 1313, the processor 340 may obtain an image to be displayed through the display by using only the optical zoom.

In an embodiment, an arrow 1325 in FIG. 13 may indicate a case that the zoom magnification is increased from the first zoom magnification range 1313 to the (2-3)th zoom magnification range 1314.

In an embodiment, the processor 340 may, in case that the zoom magnification is increased from the first zoom magnification range 1313 to the (2-3)th zoom magnification range 1314, perform the optical zoom (and the digital zoom) using the first camera 321 in the first zoom magnification range 1313, and perform the digital zoom using the (2-3)th camera in the (2-3)th zoom magnification range 1314.

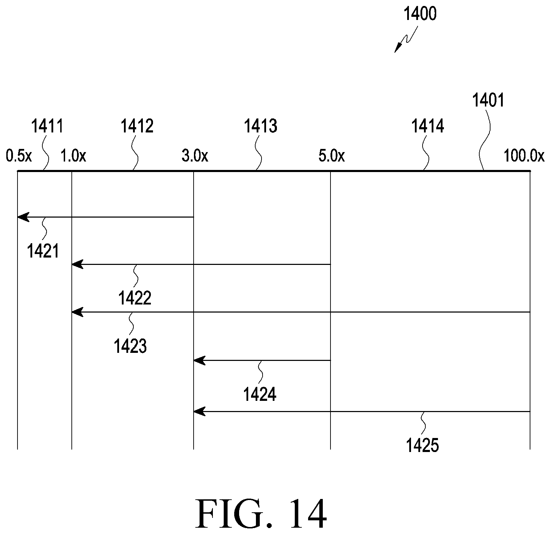

FIG. 14 is a diagram 1400 illustrating a method for providing an image in case that a zoom magnification decreases according to an embodiment.

Referring to FIG. 14, in an embodiment, a line 1401 may indicate a zoom magnification range supportable by the camera module 320. For example, the line 1401 may indicate the zoom magnification range from 0.5 times (0.5x) to 100 times (100.0x), which can be supported by the camera module 320. However, the zoom magnification range indicated by line 1401 is illustrative and not limited thereto.

In an embodiment, the zoom magnification range of the line 1401 may include a (2-1)th zoom magnification range 1411, a (2-2)th zoom magnification range 1412, a first zoom magnification range 1413, and a (2-3)th zoom magnification range 1414.

In an embodiment, an arrow 1421 in FIG. 14 may indicate a case that the zoom magnification is decreased from the (2-2)th zoom magnification range 1412 to the (2-1)th zoom magnification range 1411.

In an embodiment, the processor 340 may, in case that the zoom magnification is decreased from the (2-2)th zoom magnification range 1412 to the (2-1)th zoom magnification range 1411, change the camera for obtaining an image from the (2-2)th camera corresponding to the (2-2)th zoom magnification range 1412 to the (2-1)th camera corresponding to the (2-1)th zoom magnification range 1411.

In an embodiment, the processor 340 may obtain images by using the (2-2)th camera and the (2-1)th camera within the (2-2)th zoom magnification range 1412 and the (2-1)th zoom magnification range 1411, respectively, while the zoom magnification is decreased from the (2-2)th zoom magnification range 1412 to the (2-1)th zoom magnification range 1411. The processor 340 may obtain an image to be displayed through the display module 310 by performing the digital zoom with respect to the obtained image.

In an embodiment, an arrow 1422 in FIG. 14 may indicate a case that the zoom magnification is decreased from the first zoom magnification range 1413 to the (2-2)th zoom magnification range 1412.

In an embodiment, the processor 340 may, in case that the zoom magnification is decreased from the first zoom magnification range 1413 to the (2-2)th zoom magnification range 1412, perform the optical zoom (and the digital zoom) using the first camera 321 in the first zoom magnification range 1413, and perform the digital zoom using the (2-2)th camera in the (2-2)th zoom magnification range 1412.

In an embodiment, the processor 340 may, in case that the zoom magnification is decreased from the first zoom magnification range 1413 to the (2-2)th zoom magnification range 1412 and the rate at which the zoom magnification is decreased is greater than the first rate while the zoom magnification is decreased in the first zoom magnification range 1413, control the first camera 321 such that the optical zoom magnification is decreased at a rate identical to the first rate to minimize image quality degradation of an image to be obtained through the display module 310. For example, the processor 340 may, in case that the rate at which the zoom magnification is decreased is greater than the first rate while the zoom magnification is decreased in the first zoom magnification range 1413, cause the lens of the first camera 321 to be moved at a speed corresponding to the first rate. The processor 340 may obtain, through the first camera 321, an image to be displayed through the display while the lens of the first camera 321 is being moved at the speed corresponding to the first rate. However, it is not limited thereto. For example, the processor 340 may, in case that the rate at which the zoom magnification is decreased is greater than the first rate while the zoom magnification is decreased in the first zoom magnification range 1413, cause the lens of the first camera 321 to be moved to the position corresponding to the minimum zoom magnification in the first zoom magnification range at a speed corresponding to the second rate. The processor 340 may obtain, through the first camera 321, an image to be displayed through the display while the lens of the first camera 321 is being moved to the position corresponding to the minimum zoom magnification in the first zoom magnification range at the speed corresponding to the second rate greater than or equal to the first rate. The processor 340 may, in case that the lens of the first camera 321 has been moved to the position corresponding to the minimum zoom magnification in the first zoom magnification range at the speed corresponding to the second rate before the zoom magnification is moved to the minimum zoom magnification in the first zoom magnification range, obtain, through the first camera 321, an image to be displayed through the display, and crop the obtained image based on a crop ratio determined based on the decreased zoom magnification (e.g., the current zoom magnification) and the minimum zoom magnification in the first zoom magnification range so as to obtain an image to be displayed through the display module 310.

In an embodiment, the processor 340 may, in case that the rate at which the zoom magnification is decreased is greater than the first rate while the zoom magnification is decreased in the first zoom magnification range 1413, obtain an image to be displayed through the display module 310, based on an image obtained through another camera excluding the first camera 321. For example, the processor 340 may, in case that the rate at which the zoom magnification is decreased is greater than the first rate while the zoom magnification is decreased in the first zoom magnification range 1413, obtain an image (e.g., an image obtained at a focal length (a focal length corresponding to the minimum zoom magnification of 1 times (1.0x) in the (2-2)th zoom magnification range) of the lens of the (2-2)th camera) through the (2-2)th camera. The processor 340 may also obtain an image to be displayed through the display module 310 by performing cropping with respect to the obtained image based on the decreased zoom magnification (e.g., the current zoom magnification).

In an embodiment, an arrow 1423 in FIG. 14 may indicate a case that the zoom magnification is decreased from the (2-3)th zoom magnification range 1414 to the (2-2)th zoom magnification range 1412.

In an embodiment, the processor 340 may, in case that the zoom magnification is decreased from the (2-3)th zoom magnification range 1414 to the (2-2)th zoom magnification range 1412, perform the digital zoom using the (2-3)th camera in the (2-3)th zoom magnification range 1414, perform the digital zoom (and the optical zoom) using the first camera 321 in the first zoom magnification range 1413, and perform the digital zoom using the (2-2)th camera in the (2-2)th zoom magnification range 1412.

In an embodiment, the processor 340 may, in case that the zoom magnification is decreased from the (2-3)th zoom magnification range 1414 to the (2-2)th zoom magnification 1412, identify a rate at which the zoom magnification is decreased in the (2-3)th zoom magnification 1414.

In an embodiment, the processor 340 may, in case that the rate at which the zoom magnification is decreased in the (2-3)th zoom magnification range 1414 is greater than the first rate, move the lens of the first camera 321 to the position corresponding to the minimum zoom magnification of the first zoom magnification range in advance at a speed corresponding to the second rate before the zoom magnification is decreased to the maximum zoom magnification in the first zoom magnification range. The processor 340 may obtain the first image through the first camera 321 in a state where the lens of the first camera 321 has been moved to the position corresponding to the minimum zoom magnification in the first zoom magnification range at the speed corresponding to the second rate. The processor 340 may determine the first ratio based on the decreased zoom magnification (e.g., the current zoom magnification) and the minimum zoom magnification of the first zoom magnification range. The processor 340 may obtain the second image to be displayed through the display module 310 by cropping, based on the first ratio, the obtained first image.

In an embodiment, the processor 340 may, in case that the rate at which the zoom magnification is decreased in the (2-3)th zoom magnification range 1414 is less than or equal to the first rate, decrease the optical zoom magnification at the rate identical to the rate at which the zoom magnification is decreased in the first zoom magnification range 1413. The processor 340 may obtain, through the first camera 321, an image to be displayed through the display while the optical zoom magnification is decreased at a rate identical to the rate at which the zoom magnification is increased in the first zoom magnification range 1413.

In an embodiment, an arrow 1424 in FIG. 14 may indicate a case that the zoom magnification is decreased within the first zoom magnification range.

In an embodiment, the case that the zoom magnification is decreased within the first zoom magnification range is included in the case that the zoom magnification indicated by the arrow 1422 is decreased from the first zoom magnification range 1413 to the (2-2)th zoom magnification range 1412, and thus a detailed description thereof will be omitted.

In an embodiment, an arrow 1425 in FIG. 14 may indicate a case that the zoom magnification is decreased from the (2-3)th zoom magnification range 1414 to the first zoom magnification range 1413.

In an embodiment, the case that the zoom magnification is decreased from the (2-3)th zoom magnification range 1414 to the first zoom magnification range 1413 is included in the case that the zoom magnification indicated by the arrow 1423 is decreased from the (2-3)th zoom magnification range 1414 to the (2-2)th zoom magnification range 1412, and thus a detailed description thereof will be omitted.

In an embodiment, the method for providing an image by the electronic device 301 may include increasing a zoom magnification based on an input. The method may include, based on the zoom magnification falling within a first zoom magnification range corresponding to a first camera 321 included in the electronic device 301 and supporting the optical zoom, obtaining a first image by using the first camera 321 at a first position of a lens of the first camera 321 while the lens of the first camera 321 is being moved to a position corresponding to the zoom magnification. The method may include determining a first ratio for cropping the obtained first image based on an optical zoom magnification corresponding to the first position and the zoom magnification. The method may include obtaining a second image by cropping, based on the first ratio, the first image.

In an embodiment, obtaining the first image may include, based on the zoom magnification falling within the first zoom magnification range corresponding to the first camera 321, identifying whether a rate at which the zoom magnification is increased exceeds the first rate, based on identifying that the rate at which the zoom magnification is increased exceeds the first rate, controlling an optical zoom magnification of the first camera 321 to be increased at the first rate, and obtaining the first image by using the first camera 321 at the first position of the lens of the first camera 321 while the lens of the first camera 321 is being moved to the position corresponding to the zoom magnification.

In an embodiment, obtaining the first image may include, based on identifying that the rate at which the zoom magnification is increased is less than or equal to the first rate, controlling the optical zoom magnification of the first camera 321 to be increased at a rate identical to the rate at which the zoom magnification is increased, and obtaining an image through the first camera 321 while the optical zoom magnification is increased at the rate identical to the rate at which the zoom magnification is increased.

In an embodiment, the method may further include, in case that an input for capturing an image is received while the lens of the first camera 321 is being moved to the position corresponding to the zoom magnification, obtaining an image by using the first camera 321 after the lens of the first camera 321 has been moved to the position corresponding to the zoom magnification.

In an embodiment, the method may further include identifying a zoom magnification range within which the zoom magnification falls, from among the first zoom magnification range and one or more zoom magnification ranges corresponding to one or more second cameras 322 included in the electronic device 301 and having different focal lengths, and selecting a camera corresponding to the identified zoom magnification range as a camera for obtaining an image, from among the first camera 321 and the one or more second cameras 322.

In an embodiment, the method may further include decreasing the zoom magnification based on an input, based on the decreased zoom magnification falling within the first zoom magnification range, obtaining the image by using the first camera 321 in a state where the lens of the first camera 321 has been moved to the position corresponding to a minimum zoom magnification of the first zoom magnification range, based on the minimum zoom magnification and the decreased zoom magnification, determining the first ratio for cropping the obtained image, and obtaining an image to be displayed through the display module 310 of the electronic device 301 by cropping, based on the first ratio, the obtained image.

In an embodiment, obtaining the image by using the first camera 321 may include, in case that the zoom magnification is decreased in a second zoom magnification range including zoom magnifications greater than a maximum zoom magnification of the first zoom magnification range, identifying whether a rate at which the zoom magnification is decreased is greater than the first rate, based on identifying that the rate at which the zoom magnification is decreased is greater than the first rate, controlling the lens of the first camera 321 to move to a position corresponding to the minimum zoom magnification of the first zoom magnification range at a speed corresponding to a second rate is greater than the first rate, before the zoom magnification is decreased to the maximum zoom magnification of the first zoom magnification range, and obtaining the image by using the first camera 321 in a state where the lens of the first camera 321 is moved to the position corresponding to the minimum zoom magnification.

In an embodiment, obtaining the image by using the first camera 321 may include, based on identifying that the rate at which the zoom magnification is decreased is less than or equal to the first rate, controlling the optical zoom magnification of the first camera 321 to be increased at a rate identical to the rate at which the zoom magnification is decreased, and obtaining the image through the first camera 321 while the optical zoom magnification is decreased at the rate identical to the rate at which the zoom magnification is decreased.

In addition, the structure of data used in an embodiment of the disclosure may be recorded in a non-transitory computer-readable recording medium through various means. The computer-readable recording medium may include recording media such as magnetic recording media (e.g., ROM, a floppy disk, a hard disk, and the like) and optical reading media (e.g., CD-ROM, DVD, and the like).

**Claims**

1. An electronic device (301) comprising:

   a first camera (321) configured to support an optical zoom; and
   at least one processor (340) operatively connected to the first camera,
   wherein the at least one processor (340) is configured to:

   based on an input, increase a zoom magnification;
   based on the zoom magnification falling within a first zoom magnification range corresponding to the first camera (321), obtain a first image by using the first camera (321) at a first position of a lens of the first camera (321) while the lens of the first camera (321) is moved to a position corresponding to the zoom magnification;
   based on the zoom magnification and an optical zoom magnification corresponding to the first position, determine a first ratio for cropping the obtained first image; and
   by cropping, based on the first ratio, the first image, obtain a second image.

2. The electronic device (301) of claim 1, wherein the at least one processor (340) is configured to:

   based on the zoom magnification falling within the first zoom magnification range corresponding to the first camera (321), identify whether a rate at which the zoom magnification is increased exceeds a first rate;
   based on identifying that the rate at which the zoom magnification is increased exceeds the first rate, control an optical zoom magnification of the first camera (321) to be increased at the first rate; and
   obtain the first image by using the first camera (321) at the first position of the lens of the first camera (321) while the lens of the first camera (321) is moved to the position corresponding to the zoom magnification.

3. The electronic device (301) of claim 1 or 2, wherein the at least one processor (340) is configured to:

based on identifying that the rate at which the zoom magnification is increased is less than or equal to the first rate, control the optical zoom magnification of the first camera (321) to be increased at a rate identical to the rate at which the zoom magnification is increased; and

obtain, through the first camera (321), an image while the optical zoom magnification is increased at the rate identical to the rate at which the zoom magnification is increased.

4. The electronic device (301) of any one of claims 1 to 3, wherein the at least one processor (340) is configured to: in case that an input for capturing an image is received while the lens of the first camera (321) is moved to the position corresponding to the zoom magnification, obtain an image by using the first camera (321) after the lens of the first camera (321) is moved to the position corresponding to the zoom magnification.

5. The electronic device (301) of any one of claims 1 to 4, further comprising one or more second cameras (322) having different focal lengths,

wherein the at least one processor (340) is configured to:

identify a zoom magnification range within which the zoom magnification falls, from among the first zoom magnification range and one or more zoom magnification ranges corresponding to the one or more second cameras (322); and

select a camera corresponding to the identified zoom magnification range as a camera for obtaining an image, from among the first camera (321) and the one or more second cameras (322).

6. The electronic device (301) of any one of claims 1 to 5, wherein the at least one processor (340) is configured to:

based on an input, decrease the zoom magnification;

based on the decreased zoom magnification falling within the first zoom magnification range, obtain the image by using the first camera (321) in a state where the lens of the first camera (321) is moved to a position corresponding to a minimum zoom magnification of the first zoom magnification range;

based on the minimum zoom magnification and the decreased zoom magnification, determine the first ratio for cropping the obtained image; and

by cropping, based on the first ratio, the obtained image, obtain an image to be displayed through a display module (310) of the electronic device (301).

7. The electronic device (301) of any one of claims 1 to 6, wherein the at least one processor (340) is configured to:

in case that the zoom magnification is decreased in a second zoom magnification range including zoom magnifications greater than a maximum zoom magnification of the first zoom magnification range, identify whether a rate at which the zoom magnification is decreased is greater than the first rate;

based on identifying that the rate at which the zoom magnification is decreased is greater than the first rate, control the lens of the first camera (321) to be moved to the position corresponding to the minimum zoom magnification of the first zoom magnification range at a speed corresponding to a second rate greater than the first rate, before the zoom magnification is decreased to the maximum zoom magnification of the first zoom magnification range; and

obtain the image by using the first camera (321) in a state where the lens of the first camera (321) is moved to the position corresponding to the minimum zoom magnification.

8. The electronic device (301) of any one of claims 1 to 7, wherein the at least one processor (340) is configured to:

based on identifying that the rate at which the zoom magnification is decreased is less than or equal to the first rate, control the optical zoom magnification of the first camera (321) to be increased at a rate identical to the rate at which the zoom magnification is decreased; and

obtain the image through the first camera (321) while the optical zoom magnification is decreased at the rate identical to the rate at which the zoom magnification is decreased.

9. A method for providing an image in an electronic device (301), the method comprising:

based on an input, increasing a zoom magnification;

based on the zoom magnification falling within a first zoom magnification range corresponding to a first camera

(321) included in the electronic device (301) and configured to support an optical zoom, obtaining a first image by using the first camera (321) at a first position of a lens of the first camera (321) while the lens of the first camera (321) is moved to a position corresponding to the zoom magnification;

based on the zoom magnification and an optical zoom magnification corresponding to the first position, determining a first ratio for cropping the obtained first image; and

by cropping, based on the first ratio, the first image, obtaining a second image.

10. The method of claim 9, wherein the obtaining of the first image comprises:

based on the zoom magnification falling within the first zoom magnification range corresponding to the first camera (321), identifying whether a rate at which the zoom magnification is increased exceeds a first rate;

based on identifying that the rate at which the zoom magnification is increased exceeds the first rate, controlling an optical zoom magnification of the first camera (321) to be increased at the first rate; and

obtaining the first image by using the first camera (321) at the first position of the lens of the first camera (321) while the lens of the first camera (321) is moved to the position corresponding to the zoom magnification.

11. The method of claim 9 or 10, wherein the obtaining of the first image comprises:

based on identifying that the rate at which the zoom magnification is increased is less than or equal to the first rate, controlling the optical zoom magnification of the first camera (321) to be increased at a rate identical to the rate at which the zoom magnification is increased; and

obtaining, through the first camera (321), an image while the optical zoom magnification is increased at the rate identical to the rate at which the zoom magnification is increased.

12. The method of any one of claims 9 to 11, further comprising, in case that an input for capturing an image is received while the lens of the first camera (321) is moved to the position corresponding to the zoom magnification, obtaining an image by using the first camera (321) after the lens of the first camera (321) is moved to the position corresponding to the zoom magnification.

13. The method of any one of claims 9 to 12, further comprising:

identifying a zoom magnification range within which the zoom magnification falls, from among the first zoom magnification range and one or more zoom magnification ranges corresponding to one or more second cameras (322) included in the electronic device (301) and having different focal lengths; and

selecting a camera corresponding to the identified zoom magnification range as a camera for obtaining an image, from among the first camera (321) and the one or more second cameras (322).

14. The method of any one of claims 9 to 13, further comprising:

based on an input, decreasing the zoom magnification;

based on the decreased zoom magnification falling within the first zoom magnification range, obtaining an image by using the first camera (321) in a state where the lens of the first camera (321) is moved to a position corresponding to a minimum zoom magnification of the first zoom magnification range;

based on the minimum zoom magnification and the decreased zoom magnification, determining the first ratio for cropping the obtained image; and

by cropping, based on the first ratio, the obtained image, obtaining an image to be displayed through a display module (310) of the electronic device (301).

15. The method of any one of claims 9 to 14, wherein the obtaining of the image by using the first camera (321) comprises:

in case that the zoom magnification is decreased in a second zoom magnification range including zoom magnifications greater than a maximum zoom magnification of the first zoom magnification range, identifying whether a rate at which the zoom magnification is decreased is greater than the first rate;

based on identifying that the rate at which the zoom magnification is decreased is greater than the first rate, controlling the lens of the first camera (321) to be moved to the position corresponding to the minimum zoom magnification of the first zoom magnification range at a speed corresponding to a second rate greater than the first rate, before the zoom magnification is decreased to the maximum zoom magnification of the first zoom magnification range; and

obtaining the image by using the first camera (321) in a state where the lens of the first camera (321) is moved to the position corresponding to the minimum zoom magnification.

ELECTRONIC DEVICE 101

130 — MEMORY 132
VOLATILE MEMORY

134
NON-VOLATILE MEMORY
INTERNAL MEMORY —136
EXTERNAL MEMORY —138

150 INPUT MODULE

155 SOUND OUTPUT MODULE

160 DISPLAY MODULE

189 BATTERY

120 PROCESSOR
121 MAIN PROCESSOR
123 AUXILIARY PROCESSOR

188 POWER MANAGEMENT MODULE

190 COMMUNICATION MODULE
192 WIRELESS COMMUNICATION MODULE
194 WIRED COMMUNICATION MODULE

196 SUBSCRIBER IDENTIFICATION MODULE

197 ANTENNA MODULE

170 AUDIO MODULE

176 SENSOR MODULE

177 INTERFACE

178 CONNECTING TERMINAL

179 HAPTIC MODULE

180 CAMERA MODULE

100

140 PROGRAM
146 APPLICATION
144 MIDDLEWARE
142 OPERATING SYSTEM

199 SECOND NETWORK

104 ELECTRONIC DEVICE

198 FIRST NETWORK

102 ELECTRONIC DEVICE

108 SERVER

EP 4 607 942 A1

FIG. 1

_200_

_180_

## CAMERA MODULE

_220_

FLASH

_210_

_230_

IMAGE SENSOR

LENS ASSEMBLY

_240_

IMAGE STABILIZER

_260_

IMAGE SIGNAL PROCESSOR

_250_

MEMORY

# FIG. 2

301

340

320

CAMERA MODULE

310

321

DISPLAY MODULE

PROCESSOR

FIRST CAMERA

322

SECOND CAMERA

330

MEMORY

# FIG. 3

340

PROCESSOR

410

ZOOM MAGNIFICATION
OBTAINMENT UNIT

420

CAMERA
SELECTION UNIT

430

IMAGE
OBTAINMENT UNIT

440

CROPPING UNIT

FIG. 4

500

START

INCREASE ZOOM MAGNIFICATION ~ 501

OBTAIN FIRST IMAGE BY USING FIRST CAMERA ~ 503

DETERMINE FIRST RATIO ~ 505

OBTAIN SECOND IMAGE ~ 507

END

FIG. 5

600

START

SELECT FIRST CAMERA — 601

MOVE LENS OF FIRST CAMERA TO POSITION
CORRESPONDING TO INCREASED ZOOM MAGNIFICATION — 603

OBTAIN FIRST IMAGE AT
FIRST POSITION BY USING FIRST CAMERA — 605

END

FIG. 6

FIG. 7

FIG. 8

FIG. 9

1000

```
        START
          │
          ▼
┌─────────────────────────────────┐
│  DECREASE ZOOM MAGNIFICATION    │────1001
└─────────────────────────────────┘
          │
          ▼
┌─────────────────────────────────┐
│ OBTAIN FIRST IMAGE BY USING FIRST CAMERA │────1003
└─────────────────────────────────┘
          │
          ▼
┌─────────────────────────────────┐
│      DETERMINE FIRST RATIO      │────1005
└─────────────────────────────────┘
          │
          ▼
┌─────────────────────────────────┐
│      OBTAIN SECOND IMAGE        │────1007
└─────────────────────────────────┘
          │
          ▼
         END
```

FIG. 10

1100

START

IDENTIFY RATE AT WHICH ZOOM MAGNIFICATION IS DECREASED ~1101

MOVE LENS TO POSITION CORRESPONDING TO MINIMUM ZOOM MAGNIFICATION OF FIRST ZOOM MAGNIFICATION RANGE ~1103

OBTAIN FIRST IMAGE BY USING FIRST CAMERA ~1105

END

# FIG. 11

FIG. 12

1300

1301

1311    1312         1313         1314

0.5x    1.0x         3.0x         5.0x         100.0x

1321

1322

1323

1324

1325

FIG. 13

FIG. 14

## INTERNATIONAL SEARCH REPORT

| International application No. |
|---|
| **PCT/KR2023/014387** |

| A. | CLASSIFICATION OF SUBJECT MATTER |
|---|---|
| | **H04N 23/69**(2023.01)i; **H04N 23/63**(2023.01)i; **H04N 23/55**(2023.01)i; **H04N 23/90**(2023.01)i; **H04N 23/80**(2023.01)i |

According to International Patent Classification (IPC) or to both national classification and IPC

| B. | FIELDS SEARCHED |
|---|---|

Minimum documentation searched (classification system followed by classification symbols)

H04N 23/69(2023.01); G02B 7/28(2006.01); G03B 3/10(2006.01); G03B 5/00(2006.01); H04B 1/40(2006.01);
H04N 5/228(2006.01); H04N 5/232(2006.01); H04N 5/247(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 줌(zoom), 배율(magnification), 범위(range), 광학 줌(optical zoom), 이동 (movement), 속도(speed), 이미지(image), 크롭(crop)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0018921 A (JAHWA ELECTRONICS CO., LTD.) 21 February 2020 (2020-02-21) See paragraphs [0016], [0020], [0029], [0054], [0056] and [0060]; claim 1; and figure 1. | 1,4-6,9,12-14 |
| A | | 2-3,7-8,10-11,15 |
| Y | KR 10-2010-0137618 A (LG ELECTRONICS INC.) 31 December 2010 (2010-12-31) See claims 1-2. | 1,4-6,9,12-14 |
| Y | JP 2012-034309 A (CANON INC.) 16 February 2012 (2012-02-16) See claim 2. | 4,12 |
| A | JP 2018-088624 A (CANON INC.) 07 June 2018 (2018-06-07) See paragraphs [0007]-[0009]; and figure 1. | 1-15 |
| A | KR 10-2016-0038644 A (HANWHA TECHWIN CO., LTD.) 07 April 2016 (2016-04-07) See paragraphs [0009]-[0012]; and figure 6. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 December 2023** | **26 December 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 607 942 A1**

## INTERNATIONAL SEARCH REPORT
### Information on patent family members

International application No.

**PCT/KR2023/014387**

| Patent document cited in search report | | | Publication date (day/month/year) | Patent family member(s) | | | Publication date (day/month/year) |
|---|---|---|---|---|---|---|---|
| KR | 10-2020-0018921 | A | 21 February 2020 | None | | | |
| KR | 10-2010-0137618 | A | 31 December 2010 | CN | 101931691 | A | 29 December 2010 |
| | | | | CN | 101931691 | B | 15 January 2014 |
| | | | | EP | 2267994 | A1 | 29 December 2010 |
| | | | | EP | 2267994 | B1 | 16 April 2014 |
| | | | | KR | 10-1527037 | B1 | 16 June 2015 |
| | | | | US | 2010-0321536 | A1 | 23 December 2010 |
| | | | | US | 8339480 | B2 | 25 December 2012 |
| JP | 2012-034309 | A | 16 February 2012 | JP | 5595167 | B2 | 24 September 2014 |
| JP | 2018-088624 | A | 07 June 2018 | None | | | |
| KR | 10-2016-0038644 | A | 07 April 2016 | CN | 105472235 | A | 06 April 2016 |
| | | | | CN | 105472235 | B | 27 March 2020 |
| | | | | KR | 10-1932546 | B1 | 27 December 2018 |
| | | | | US | 2016-0094791 | A1 | 31 March 2016 |
| | | | | US | 9503651 | B2 | 22 November 2016 |

Form PCT/ISA/210 (patent family annex) (July 2022)